# EUROPEAN PATENT APPLICATION

(11) **EP 4 527 954 A1**
(43) Date of publication of application: **26.03.2025**
(21) Application number: 23910774.1
(22) Date of filing: 27.12.2023
(51) Int. Cl.: C22B 3/08

(54) **LEACHING METHOD FOR SULFIDE MINERALS**

(30) Priority: 31.12.2022 CN 202211734735; 31.12.2022 CN 202211736413; 31.12.2022 CN 202211737833; 31.12.2022 CN 202211739397; 31.12.2022 CN 202211739586; 31.12.2022 CN 202211739904
(71) Applicant: Guizhou CNGR Resource Recycling Industry Development Co., Ltd, Tongren, Guizhou 554300 (CN); Guangxi CNGR New Energy Science & Technology Co., Ltd, Qinzhou, Guangxi 535008 (CN)
(72) Inventor: REN, Xingting, Tongren, Guizhou 554300 (CN); HU, Peihong, Tongren, Guizhou 554300 (CN); FENG, Demao, Tongren, Guizhou 554300 (CN); ZHANG, Mengnan, Tongren, Guizhou 554300 (CN); LIU, Zhenbo, Tongren, Guizhou 554300 (CN); YU, Wei, Tongren, Guizhou 554300 (CN); PENG, Jianbo, Tongren, Guizhou 554300 (CN)
(74) Representative: Locas, Davide
(86) International application number: PCT/CN2023/142522
(87) International publication number: WO 2024/140857

(57) **Abstract**

The present invention provides a method of leaching sulfide mineral, including: first grinding the sulfide mineral into a powder. A small particle size can increase a specific surface area of the powder, and thus increase a reaction rate of sulfide and a leaching rate of metal. The increase of reaction rate and leaching rate of metal can reduce a pressure in pressurized leaching, so as to reduce problems of large investment and high safety risk caused by configuring a large amount of high-pressure oxygen-rich equipment.

## Description

### CROSS-REFERENCE TO RELATED APPLICATION

The present invention claims priority to the Chinese patent application with the filing No. CN202211739397.7 filed on December 31, 2022 and entitled "METHOD OF LEACHING SULFIDE MINERAL", the Chinese patent application with the filing No. CN202211736413.7 filed on December 31, 2022 and entitled "METHOD OF LEACHING SULFIDE MINERAL", the Chinese patent application with the filing No. CN202211739586.4 filed on December 31, 2022 and entitled "METHOD OF LEACHING SULFIDE MINERAL", the Chinese patent application with the filing No. CN202211734735.8 filed on December 31, 2022 and entitled "METHOD OF LEACHING SULFIDE MINERAL", the Chinese patent application with the filing No. CN202211737833.7 filed on December 31, 2022 and entitled "METHOD OF LEACHING SULFIDE MINERAL", and the Chinese patent application with the filing No. CN202211739904.7 filed on December 31, 2022 and entitled "METHOD OF LEACHING SULFIDE MINERAL", the contents of which are incorporated herein by reference in entirety.

### TECHNICAL FIELD

The present invention relates to the field of non-ferrous metal hydrometallurgy, and particularly to a method of leaching sulfide mineral (ore).

### BACKGROUND ART

Sulfide minerals are one of the major forms of raw metal nowadays. Copper and cobalt raw materials represented by copper-cobalt sulfide minerals and copper-cobalt alloys and nickel raw materials represented by nickel sulfide minerals, high nickel matte and low nickel matte occupy considerable proportions in the industry of hydrometallurgy, have the characteristics of a high metal grade and rich reserve, and are easier to purify than other forms of minerals. Therefore, it is quite necessary to study leaching technology of sulfide minerals for development of modem metallurgy.

A brief introduction is made by taking high nickel matte as representative. A general leaching process thereof is grinding the high nickel matte by a ball mill to 200 meshes, then performing normal-pressure preimpregnation in a dilute sulfuric acid reaction solution, continuing to leach and purify unleached nickel under a high-pressure high-temperature oxygen-rich condition, and removing other impurities, to finally produce a high-purity nickel sulfate solution, which solution can be directly used for producing high-purity nickel series products.

In this conventional method of processing and treating high nickel matte, a general process is performing preimpregnation using a low-concentration dilute sulfuric acid reaction solution in a normal-pressure leaching stage, which has a low leaching rate of nickel and can only leach part of elemental metallic nickel in the high nickel matte, and more than 70% of leaching reaction needs to be conducted under a pressurized oxygen-rich condition. A pressurized leaching technology requires multiple stages of pressurized leaching, and a large amount of high-pressure oxygen-rich reaction equipment need to be configured, leading to a large equipment investment and enormous power consumption. Meanwhile, the configuration of a large number of high-pressure oxygen-rich equipment also increases potential safety hazards in the production process.

### SUMMARY

The present invention provides a method of leaching sulfide mineral, so as to solve the problems of large investment and high safety risk caused by the need of configuration of a large amount of high-pressure oxygen-rich equipment in the pressurized leaching technology in the prior art.

The present invention provides a method of leaching sulfide mineral, including:
first grinding the sulfide mineral into a powder.

The sulfide mineral is at least one of nickel sulfide mineral, copper-cobalt sulfide mineral, cobalt-copper alloy, high nickel matte, and low nickel matte.

Optionally, a particle size D90 of the powder is smaller than or equal to 40 µm.

A small particle size can increase a specific surface area of the powder, and thus increase a reaction rate of sulfide and a leaching rate of metal. It may be understood that the increase of reaction rate and leaching rate of metal can reduce a pressure in a pressurized leaching stage, so as to reduce the problems of large investment and high safety risk caused by configuring a large amount of high-pressure oxygen-rich equipment.

In some optional embodiments, the method includes:
first preparing the sulfur mineral into a slurried solution, performing an oxidizing roasting treatment on the slurried solution, and then carrying out an oxidizing leaching reaction and impurity removal to render a sulfate solution. In the above, during the oxidizing roasting treatment on the slurried solution, oxygen with purity greater than 90% is continuously introduced into the slurried solution, and a temperature of the slurried solution is maintained at 400-800 °C. The step of first preparing the sulfur mineral into a slurried solution includes first grinding the sulfide mineral into a powder, and mixing the powder with a liquid to prepare the slurried solution.

In the present solution, the slurried solution of sulfide mineral is pretreated by the oxidizing roasting, so that on one hand, oxidizing reaction of sulfide in the sulfide mineral is accelerated, and on the other hand, leaching reaction of elemental metal in the sulfide mineral is accelerated. The present technological method can accomplish complete leaching without high-pressure leaching, can greatly improve a leaching rate of metal of the sulfide mineral under a normal-pressure condition, and meanwhile greatly reduce leaching and purifying costs of the sulfide mineral.

Optionally, the method includes:
step a of slurrying (pulpifying) reaction: grinding the sulfide mineral, and then mixing the ground sulfide mineral with a liquid to prepare a slurried solution, wherein a solid content of the slurried solution is greater than 50%;
step b of oxidizing roasting treatment: adding the slurried solution into an oxidizing roasting device, to carry out an oxidizing roasting treatment to render a roasted material, wherein oxygen with purity greater than 90% is continuously introduced into the slurried solution, and a temperature of the slurried solution is maintained at 400-800 °C;
step c of oxidizing leaching reaction: transferring the roasted material into an oxidizing leaching reaction device, introducing oxygen into the oxidizing leaching reaction device to carry out an oxidizing leaching reaction, and performing a solid-liquid separation treatment on a slurry produced after the oxidizing leaching reaction, to render a leaching residue and a leaching solution; and
step d of impurity removal: performing impurity removal on the leaching solution produced in the step c, to render a sulfate solution.
In the above, the liquid in the step a is at least one of water, the leaching solution obtained from the step c of oxidizing leaching reaction or the sulfate solution obtained after the step d of impurity removal.

Optionally, the step a specifically is:
grinding the sulfide mineral twice, wherein the twice grinding includes a first-stage ball-mill coarse grinding and a second-stage sand-mill fine grinding, and wherein a ball mill or a Raymond mill is used in the first-stage ball-mill coarse grinding, and a tube mill, a vibration mill or a mechanical stirring mill is used in the second-stage sand-mill fine grinding.

After the sulfide mineral is ground for the first time to render a first powder, the first powder is ground for the second time to render a second powder, wherein a particle size D90 of the first powder is smaller than or equal to 80 µm, and the particle size D90 of the second powder is smaller than or equal to 40 µm; the second powder is poured into the slurrying device equipped with a stirring device by means of pneumatic conveying at a positive pressure, to prepare the slurried solution.

In the above, the particle size D90 is a corresponding particle size when a cumulative particle size distribution value of a sample reaches 90%, that is, particles in the powder having a median diameter of 40 µm or below are accumulated to be more than 90% of total particles.

Optionally, in the step b, a feeding rate in the oxidizing roasting is 0.5-10 t/h; and time of the oxidizing roasting is 0.2-0.5 h.

Optionally, in the step c, the oxidizing leaching reaction device is a stirring reactor equipped with a resonant oxygen injector.

In the oxidizing leaching reaction, a stirring rate of the stirring reactor is 50-120 r/min.

A temperature inside the stirring reactor is 60-90 °C.

The oxygen is introduced into the stirring reaction at an introduction rate of 10-60 Nm³/h, and purity is greater than 90%.

Time of the oxidizing leaching reaction is 2-13 h.

Optionally, the step c includes, after adding the roasted material into a sulfuric acid reaction solution, injecting oxygen, dispersed by the resonant oxygen injector, into the stirring reactor from a predetermined position below a liquid level of the stirring reactor, to carry out the oxidizing leaching reaction.

The oxygen is dispersed by the resonant oxygen injector for the normal-pressure oxidizing leaching, so that on one hand, oxygen with higher purity is utilized to carry out the oxidizing reaction, and on the other hand, the oxygen is dispersed into microbubbles by the resonant oxygen injector and injected 5 meters below the liquid level of the reaction kettle, which greatly improves the dispersion effect of oxygen. In addition, the grinding effect of grinding the material to the particle size of about 40 µm through the two-stage grinding is far superior to that of the particle size of about 80 µm through only one-stage grinding, and a specific surface area of the material and the contact area between the material and oxygen are greatly increased, and thus the reaction rate of oxidizing sulfide under a normal pressure and the leaching rate of elemental metal can be greatly increased.

Optionally, in the step c, a concentration of sulfuric acid in the sulfuric acid reaction solution is 100-160 g/L.

Optionally, in the step d:
when the sulfide mineral is at least one of nickel sulfide mineral, high nickel matte, and low nickel matte and Cu²⁺ in the leaching solution is greater than or equal to 8 g/L, an iron powder is added into the leaching solution, to carry out a reaction for removing copper through replacement by iron powder under conditions of pH of the reaction being 1-2 and a reaction temperature being 60-80 °C, then iron-removing purification is carried out by an iron vitriol method, and solid-liquid separation is performed, wherein the leaching solution and the iron powder react for 0.5-2 h.

Optionally, when the iron-removing purification is carried out by the iron vitriol method in the step d, a concentration of Cu²⁺ is smaller than 2 g/L, a reaction temperature is greater than 60 °C, pH of the reaction is smaller than 2.0, and the reaction lasts for 6-8 h.

In some optional embodiments, the method includes:
grinding the sulfide mineral for two times, and mixing the ground sulfide mineral with water to prepare a slurried solution with a solid content greater than or equal to 70%, mixing the roasted material obtained by roasting the slurried solution with a hydrochloric acid and oxygen, to carry out a leaching reaction under a normal-pressure condition, to render a chloride solution containing a target non-ferrous metal after completing the reaction.

By mixing the sulfide mineral with water to prepare the slurried solution and then performing roasting, a sulfide form of the target non-ferrous metal in the sulfide mineral can be converted into a metal salt form, and subsequently the metal salt is dissolved in water or other solvents, to obtain an ionic form of the target non-ferrous metal, and thus realizing leaching. Moreover, by controlling the solid content in the slurried solution to be greater than or equal to 70%, the sulfide mineral can be uniformly dispersed in the slurried solution, so as to facilitate improvement on roasting efficiency of the slurried solution, and heat consumed by water in the slurried solution in the roasting stage also can be minimized, and meanwhile the roasting is accelerated. In the normal-pressure stage, the roasted sulfide mineral is subjected to the leaching reaction with the hydrochloric acid and oxygen, and due to strong acidity of the hydrochloric acid, target non-ferrous metal element and sulfide form can be converted into the ionic form, so that the target non-ferrous metal is fully leached. By the above leaching method, the leaching rate of target non-ferrous metal in the sulfide mineral under a normal-pressure condition can be greatly improved, and the leaching cost of the sulfide mineral is greatly reduced. Moreover, the present solution can take nickel, copper, and cobalt, which are more valuable, as the target non-ferrous metal to be extracted, for example, the present solution is suitable for extracting nickel in nickel sulfide mineral, copper and cobalt in copper-cobalt sulfide mineral, copper and cobalt in copper-cobalt alloy, nickel in high nickel matte and nickel in low nickel matte.

Optionally, the twice grinding is first-stage grinding and second-stage grinding, to render the ground powder. By means of two-stage grinding of first coarse grinding and then fine grinding, the grinding effect can be improved, a specific surface area of the ground material and a contact area between the material and oxygen are increased, so as to improve the normal-pressure reaction rate of the sulfide mineral and the leaching rate of the target non-ferrous metal.

Optionally, a ball mill or a Raymond mill is used in the first-stage grinding for coarse grinding until the sulfide mineral has a particle size D90 of smaller than 80 µm, and a tube mill, a vibration mill or a mechanical stirring mill is used in the second-stage grinding for fine grinding until the sulfide mineral has a particle size D90 of smaller than 40 µm. By controlling the particle size D90 of the ground sulfide mineral to be smaller than 40 µm, the particle size of the sulfide mineral is allowed to be small enough, and its specific surface area is sufficiently large, so that a roasting rate of the sulfide mineral can be accelerated, reaction time can be saved, and the contact area between the sulfide mineral and the hydrochloric acid is bigger in a normal-pressure oxidizing stage, further ensuring full reaction of the sulfide mineral with the hydrochloric acid.

Optionally, a method of preparing the slurried solution specifically includes: pouring the ground powder into a slurrying device filled with a solution at a positive pressure of 0.3-0.6 Mpa, and stirring the powder and the liquid to prepare the slurried solution with a solid content greater than or equal to 70%. By the above method, a slurrying rate and slurrying effect of the powder can be improved, which facilitates improvement on the normal-pressure leaching efficiency.

Optionally, a method of roasting the slurried solution is: adding the slurried solution into a rotary roaster at a predetermined feeding rate, and carrying out oxidizing roasting under a condition of a predetermined temperature, wherein during the oxidizing roasting, oxygen with purity greater than 90% is continuously introduced. By adding the slurried solution into the rotary roaster, the sulfide mineral in the slurried solution can be fully roasted, which can accelerate oxidizing reaction of sulfide form of the target non-ferrous metal in the sulfide mineral. Moreover, by introducing the oxygen with purity greater than 90% in a roasting stage, oxidizing roasting efficiency can be further improved, and a reaction course of converting the target non-ferrous metal from the sulfide form to the metal salt form can be accelerated.

Optionally, a temperature of the oxidizing roasting is (400-800) °C, time of the oxidizing roasting is 0.3-0.8 h; and a feeding rate of the slurried solution during the roasting is (0.5-10) t/h. By controlling the reaction temperature and reaction time in the oxidizing roasting stage, the slurried solution can be roasted in the rotary roaster for a long enough time, to ensure that contact time between oxygen and the slurried solution is long enough, so as to ensure oxidizing reaction efficiency in the oxidizing roasting stage. Moreover, by controlling the feeding rate of the slurried solution, it is realized that the slurried solution is continuously supplemented during the oxidizing reaction, which can ensure maximization of reaction efficiency of the slurried solution and the oxygen, so that the oxidizing roasting reaction is thorough.

Optionally, the leaching reaction specifically includes: adding the roasted material into a hydrochloric acid while stirring, introducing oxygen to carry out the oxidizing leaching reaction, and performing solid-liquid separation after completing the reaction to render a leaching solution and a filter residue. By gradually adding the roasted material, that is, the roasted slurried solution, into the hydrochloric acid, the hydrochloric acid will not be immediately diluted by a large amount of roasted material, and thus, the hydrochloric acid can be maintained at a high concentration in as long reaction time as possible, so as to realize full mixing between the roasted material and the hydrochloric acid, thus improving the leaching reaction efficiency in the normal-pressure oxidizing stage.

Optionally, a concentration of the hydrochloric acid is (20-180) g/L. The concentration of the hydrochloric acid is further defined, and within this range of concentration, hydrogen ions contained in the hydrochloric acid can be utilized to the maximum degree, so as to improve reaction efficiency of the hydrochloric acid and the target non-ferrous metal in elemental and sulfide forms in the sulfide mineral.

Optionally, time of the leaching reaction is (2-13) h, and a reaction temperature is (60-90) °C.

In the above technical solution of the present invention, the reaction time and reaction temperature of the oxidizing leaching reaction are further defined, and with such reaction time and reaction temperature, the sulfide mineral can fully react with the hydrochloric acid, so as to facilitate complete leaching of the target non-ferrous metal.

Optionally, the oxygen is introduced in such a way that a mixture of the roasted material and hydrochloric acid is cyclically conveyed into a reactor and stirred, and meanwhile oxygen is introduced into the reactor by an ultrasonic super-energy oxidizer to be mixed with the roasted material and hydrochloric acid, wherein purity of the oxygen is greater than 90%, and an introduction rate of the oxygen is (10-60) Nm³/h.

In the above technical solution of the present invention, the oxygen is introduced into the mixture of the roasted material and hydrochloric acid by the ultrasonic super-energy oxidizer provided, and the oxygen can be dispersed by ultrasonic waves generated by the ultrasonic super-energy oxidizer, so that a particle size of bubbles of the oxygen formed after entering the mixture is small enough, and thus the contact area between the oxygen and the roasted material and hydrochloric acid is increased. Meanwhile, the ultrasonic waves can also greatly improve the dispersion effect of the oxygen in the mixture, and enhance the extent to which the oxygen participates in the oxidizing leaching reaction. Moreover, using the oxygen with higher purity to conduct the oxidizing reaction can further improve the reaction rate in the normal-pressure leaching stage.

Optionally, the stirring rate is (50-120) r/min.

In the above technical solution of the present invention, by controlling the mixing and stirring rate of the roasted material, i.e., the roasted slurried solution, and the hydrochloric acid, the oxidizing leaching reaction can be ensured to proceed smoothly, so that the normal-pressure stage can be maintained at a relatively high reaction rate.

Optionally, after the leaching reaction is completed, the method further includes impurity removal.

In the above, the impurity removal specifically includes:
adding the leaching solution obtained by performing filtration after the leaching reaction into a reaction kettle for removing impurities, adding an iron powder to perform a replacement reaction, wherein pH for removing impurities is controlled to be 1-2, a temperature for removing impurities is controlled to be (60-80) °C, after the reaction, removing iron by a hydrolysis method, and performing filtration, to render a chloride solution containing a target non-ferrous metal. Under predetermined pH for removing impurities and temperature for removing impurities, through reaction of the iron powder with impurity ions in the leaching solution, the impurity ions in the leaching solution can be replaced, so that they are converted into a solid state and settled, and then by removing the iron by the hydrolysis method and then performing filtration, an ionic form of the target non-ferrous metal is obtained, for producing a series of highly pure products containing the target non-ferrous metal. Compared with the impurity removal in conventional leaching technology in which soda is used for neutralization hydrolysis and then extraction, the impurity removal stage in the present invention is simpler and faster, and is beneficial to cutting down technological processes of the leaching.

Optionally, the method includes:
S1, mixing a ground powder obtained by grinding the sulfide mineral with a sulfuric acid solution, to prepare a slurried solution with a solid content greater than 30%;
S2, under a normal-pressure condition, introducing oxygen from a bottom of the slurried solution, so that the oxygen enters the slurried solution from the bottom of the slurried solution and reacts with the slurried solution, and after completing the reaction, performing filtration to render a filter residue and a filtrate; and
S3, under a condition that a gas pressure is greater than 1.2 Mpa, slurrying the filter residue, then making the slurried filter residue mixed and react with oxygen, after completing reaction, performing filtration to render a leaching solution, and removing impurities from the leaching solution, to render a sulfate solution containing a target non-ferrous metal.

In the above technical solution of the present invention, in the step S1, a sulfide mineral raw material to be extracted is ground and then mixed with the sulfuric acid solution for preimpregnation, so that the sulfide mineral can be fully pre-activated, and it is realized that part of target non-ferrous metal elements in the sulfide mineral are converted into ionic form or sulfide form, that is, part of target non-ferrous metal elements can be leached out, so as to improve the leaching rate of the target non-ferrous metal. Furthermore, by controlling the solid content of the slurried solution to be greater than 30%, it facilitates full reaction of the slurried solution with oxygen in a subsequent normal-pressure oxidizing stage, and avoids waste caused by insufficient reaction of the oxygen. In the step S2, in the normal-pressure oxidizing stage, by making oxygen react with the slurried solution, the target non-ferrous metal elements and sulfide form in the slurried solution can be converted into the ionic form. In addition, by introducing the oxygen into the slurried solution from the bottom of the slurried solution, a reaction degree of the oxygen with the slurried solution can be enhanced, so that the oxygen can fully react with the slurried solution, so as to improve the leaching rate of the target non-ferrous metal in the normal-pressure oxidizing stage as far as possible. In the step S3, in a pressurized oxidizing stage, the oxygen reacts with the filtrate under a high-pressure condition, which can further convert the target non-ferrous metal elements and sulfide form in the filtrate into the ionic form, and then remove impurities from the leaching solution to render the sulfate solution containing the target non-ferrous metal. In the above process, as a better leaching effect can be achieved in the normal-pressure oxidizing stage, compared with the conventional process, the present invention can reduce an arrangement scale of high-pressure reaction equipment, shorten a process flow in the pressurized oxidizing stage, and save production costs.

Optionally, the step S1 specifically includes:
grinding granulated sulfide mineral by a vertical roller mill to render a ground powder; and
pouring the ground powder into a reaction device containing (100-300) g/L sulfuric acid solution by means of pneumatic conveying at a positive pressure of 0.45-0.75 Mpa and slurrying the same, to prepare a slurried solution with a solid content greater than 30%.

In the above technical solution of the present invention, relatively large sulfide mineral particles are first ground and crushed to render the powder, and then the obtained powder is poured into the sulfuric acid solution by means of pneumatic conveying at a positive pressure. In the above, positive pressure wind directly blows the powder into the sulfuric acid solution, and due to the action of the positive pressure wind, a large number of bubbles are generated in the sulfuric acid solution, which can improve a mixing degree of the powder and the sulfuric acid solution, so that the powder and the sulfuric acid solution are fully mixed to form a relatively uniform slurried solution. Optionally, during formation of the slurried solution, as the powder is gradually added into the sulfuric acid solution in the present invention, the sulfuric acid solution will not be immediately diluted by a large amount of powder, and thus the sulfuric acid solution can be maintained at a relatively high concentration within as long reaction time as possible, thereby realizing full mixing and reaction between the powder and the sulfuric acid.

In the above technical solution of the present invention, nickel and copper which are more valuable can be taken as the target non-ferrous metal to be extracted, for example, the present solution is suitable for extracting nickel in nickel sulfide mineral, copper in copper-cobalt sulfide mineral, copper in copper-cobalt alloy, nickel in high nickel matte and nickel in low nickel matte. By controlling the particle size D90 of the ground sulfide mineral powder to be smaller than 40 µm, the particle size of the powder is sufficiently small, and the specific surface area thereof is sufficiently large, so that the powder is fully contacted with the sulfuric acid solution. Moreover, by controlling a liquid-solid mass ratio in the slurried solution, full reaction of the slurried solution powder with the sulfuric acid solution can be further ensured.

Optionally, the step S2 specifically includes:
adding the slurried solution from a top of a reaction kettle into the reaction kettle at a predetermined feeding rate in a predetermined feeding amount, and introducing a predetermined amount of oxygen from a bottom of the reaction kettle by a resonant oxygen injector, such that the oxygen enters the slurried solution from bottom of the slurried solution and contacts and reacts with the slurried solution, wherein a normal-pressure condition is maintained in the reaction kettle during reaction; and
a reaction temperature of the slurried solution and the oxygen is (60-90) °C, and reaction time is (2-13) h.

In the above technical solution of the present invention, in a normal-pressure oxidizing stage, the slurried solution is injected from the top of the reaction kettle, and meanwhile, the oxygen is introduced into the bottom of the reaction kettle by the resonant oxygen injector, so that the oxygen can enter, in a form of bubbles, the slurried solution in the reaction kettle from the bottom of the reaction kettle, so that the oxygen is fully contacted and reacted with the slurried solution. Furthermore, the oxygen can be dispersed into microbubbles with a relatively small particle diameter by the resonant oxygen injector, so as to increase the specific surface area of the oxygen, thereby increasing a contact area between the oxygen and the slurried solution, further improving reaction efficiency in the normal-pressure oxidizing stage, and improving a leaching rate of a target non-ferrous metal. Optionally, by controlling the reaction temperature and the reaction time in the normal-pressure oxidizing stage, the oxygen may not quickly pass through the slurried solution, which ensures that contact time between the oxygen and the slurried solution is long enough so as to ensure the leaching rate in the normal-pressure oxidizing stage.

Optionally, the reaction kettle is a Pachuca tank with pneumatic stirring, and a bottom of the Pachuca tank is connected to the resonant oxygen injector.

The step S2 specifically includes:
adding the slurried solution from a top of the Pachuca tank, and introducing the oxygen by the resonant oxygen injector from the bottom of the Pachuca tank, wherein a feeding rate of the slurried solution is (0.5-10) t/h.

In the above technical solution of the present invention, the Pachuca tank is used as a reaction vessel, the slurried solution is injected from the top of the Pachuca tank, the oxygen is introduced from the bottom of the Pachuca tank, so that the oxygen enters the slurried solution from the bottom of the slurried solution in the Pachuca tank and gradually rises until escaping from a liquid level of the slurried solution. In this process, the rising of the oxygen may cause formation of a pressure difference locally in the slurried solution in the Pachuca tank, so that the slurried solution may circulate in the Pachuca tank. Thus, solid particles (containing the target non-ferrous metal) in the slurried solution also circulate in the Pachuca tank, and then the solid particles will be evenly dispersed in the slurried solution without settling, so that the slurried solution can be fully contacted and reacted with the oxygen. Moreover, the circulation of the slurried solution can make a contact phase interface between the slurried solution and the oxygen to be continuously updated, thereby further improving the reaction efficiency. Moreover, by controlling a suitable feeding rate and feeding amount of the slurried solution, it is realized that the slurried solution is continuously supplemented during the reaction, which can ensure maximization of reaction efficiency of the slurried solution and the oxygen, so that the reaction is thorough.

Optionally, in the step S2, an interval between the liquid level of the slurried solution in the Pachuca tank and an inlet of the oxygen is at least 5 meters; the purity of the oxygen is greater than 90%, and an introduction rate of the oxygen is (10-60) Nm³/h.

**In** the above technical solution of the present invention, a distance between the inlet of oxygen and the liquid level of the slurried solution is controlled to be at least 5 meters, so that the oxygen has a long enough path in the slurried solution, and thus the dispersion effect of the oxygen in the slurried solution is better, which facilitates full contact between the oxygen and the slurried solution, and can improve the utilization rate of the oxygen.

Optionally, by controlling an oxygen content in the oxygen and the introduction rate of the oxygen, the introduced oxygen can be used to the maximum degree, and utilization rate of the oxygen is improved as far as possible without affecting the leaching rate.

Optionally, the step S3 specifically includes:
mixing and slurrying the filter residue and a sulfuric acid solution with a concentration of 20-100 g/L according to a mass ratio of 1: (1-10), and then conveying the same into a pressurized reaction kettle, wherein time of the slurrying is 0.5-2 h; and
into the pressurized reaction kettle introducing oxygen to raise a gas pressure in the pressurized reaction kettle to be greater than 1.2 Mpa, after raising a temperature in the pressurized reaction kettle to a predetermined temperature, making the oxygen react with the slurred filter residue, wherein after the reaction starts, a reaction temperature is maintained by heat released by the reaction itself until the reaction ends, then performing filtration to render a leaching solution, and removing impurities from the leaching solution to render a sulfate solution containing a target non-ferrous metal.

**In** the above technical solution of the present invention, in the pressurized oxidizing stage, the gas pressure in the pressurized reaction kettle is controlled to be maintained at 1.2 Mpa or above by introducing the oxygen; the reaction degree of the oxygen and the slurried solution can be enhanced in a high-pressure oxygen-rich environment, so that the target non-ferrous metal which is not completely leached out in the normal-pressure oxidizing stage is leached out in the pressurized oxidizing stage, thus ensuring a total leaching rate of the target non-ferrous metal. Moreover, as the leaching rate in the normal-pressure oxidizing stage is improved, technological processes in the pressurized oxidizing stage can be appropriately reduced, that is the number and specification of pressurized reaction equipment such as the pressurized reaction kettle can be appropriately cut down, thereby reducing the overall production cost.

Optionally, in the step S3, before the reaction starts, the temperature in the pressurized reaction kettle is raised to 120 °C or above, and time of mixing and reacting the filter residue with the oxygen after the slurrying is 2-4 h.

In the above technical solution of the present invention, at the beginning of the reaction, the temperature in the pressurized reaction kettle only needs to be raised to 120 °C, then during the pressurized reaction, the pressurized reaction kettle can always be in a relatively high temperature condition due to heat released by the reaction itself, and specifically, the reaction temperature during the reaction can be maintained to be greater than 160 °C so as to maintain a relatively high reaction rate. It should be noted that, if the temperature during the reaction does not reach 160 °C due to environmental factor or other factors, the interior of the pressurized reaction kettle can be manually heated to maintain an appropriate reaction temperature and ensure the reaction efficiency.

Optionally, in the step S3, the gas pressure in the pressurized reaction kettle is maintained to be not less than 1.8 Mpa during the reaction.

In the above technical solution of the present invention, the gas pressure in the pressurized reaction kettle can be specifically controlled to be maintained at not less than 1.8 Mpa, and in this case, the efficiency of the pressurized reaction can achieve a better effect.

Optionally, in the step S3, the removing impurities includes:
to the filtered leaching solution adding an LIX extractant for reaction, wherein pH of the reaction is controlled to be 1-2, a temperature of the reaction is 40-55 °C, and time of the reaction is 0.1-0.2 h; and
after completing the reaction, performing purification by a 6-section box-type extraction method, and performing filtration to render a sulfate solution of the target non-ferrous metal.

In the above technical solution of the present invention, predetermined pH and reaction temperature are first controlled, the LIX extractant is used to react with impurities in the leaching solution, and the LIX extractant and the impurities after the reaction is completed are extracted by the 6-section box-type extraction method, so as to remove other metal impurities in the leaching solution except the target non-ferrous metal, and finally obtain an ionic form of the target non-ferrous metal, for producing a series of highly pure products containing the target non-ferrous metal.

Optionally, in the step S3, a volume proportion of a solvent oil in an organic phase of the 6-section box-type extraction method is 70%~80%, a volume proportion of the LIX extractant is 20%~30%, a temperature the extraction is lower than or equal to 55 °C, and each extraction section of the 6-section box-type extraction method includes two stages of extraction, wherein reaction time of each stage of extraction is 5-10 min, and clarification time is 20-30 min.

In the above technical solution of the present invention, by controlling an amount and a ratio of the used organic phase in the 6-section box-type extraction method, and controlling suitable extraction temperature and extraction time, the impurities in the leaching solution can be removed as much as possible in a stage of removing impurities.

Optionally, the method includes:
first grinding a sulfide mineral into a powder, to prepare a slurried solution, then adding the slurried solution to a pre-formulated sulfuric acid reaction solution to perform a preimpregnation reaction, and then performing an oxidizing leaching reaction to render a sulfate solution.

In the above, a concentration of sulfuric acid in the sulfuric acid reaction solution is 30-300 g/L.

In the present solution, by first preparing the acid and then adding the material, the sulfuric acid reaction solution is prepared in advance, and the prepared slurried solution is added to the sulfuric acid reaction solution, an amount of acid in the sulfuric acid reaction solution in an initial state is sufficient, and in this case, the slurried solution is introduced therein, and the slurried solution can immediately fully react with the sulfuric acid reaction solution, to oxidize part of sulfides of the metal by virtue of strong oxidizing property of sulfuric acid, further improving a leaching rate of the metal and a rate of the leaching reaction.

In some techniques, the crushed sulfide mineral is not slurried, and a dilute sulfuric acid is directly added to leach under a normal pressure. In an early stage of normal-pressure leaching, hydrophobic sulfide mineral that is not easy to wet by water floats and aggregates in a mass under support of surface tension. The leaching effect is poor before the material is completely soaked. It takes certain time to wait for soaking, which results in low efficiency of a leaching reaction conducted in acid leaching equipment that requires high resistance to acid corrosion, and results in low leaching efficiency of the equipment per unit time and per volume.

In addition, in case of direct introduction of the sulfuric acid solution into the slurried solution, an amount of the slurried solution in an early stage is significantly larger than the amount of the sulfuric acid solution, and thus the slurried solution cannot be ensured to fully quickly react, that is, an oxidizing effect on metal sulfide in the slurried solution cannot be ensured, further affecting the leaching rate of the metal.

A too low concentration of the sulfuric acid reaction solution may lead to a poor oxidizing effect, and a too high concentration and a supersaturated oxidizing effect may cause waste of raw materials of reaction; therefore, in the present solution, the concentration of sulfuric acid in the sulfuric acid reaction solution is set to be 30-300 g/L. The sulfuric acid reaction solution with this concentration not only has a good oxidizing effect and can ensure the leaching rate of metal, but also can ensure a high utilization efficiency of the raw materials of reaction.

Optionally, the method includes the following steps:
step a of slurrying reaction: grinding the sulfide mineral into a powder, and mixing the powder with a liquid to prepare a slurried solution;
step b of preimpregnation reaction: adding the slurried solution into the pre-formulated sulfuric acid reaction solution, introducing oxygen, and performing a preimpregnation reaction to render a reaction solution; and
step c of oxidizing leaching reaction: introducing oxygen into the reaction solution to perform an oxidizing leaching treatment, to render a leaching solution and a leaching residue.

Optionally, when the sulfide mineral is at least one of nickel sulfide mineral, high nickel matte, and low nickel matte, after the step c of oxidizing leaching reaction is completed, the method includes a step d of impurity removal: performing impurity removal on the leaching solution to render a sulfate solution.

The method of leaching sulfide mineral in the present solution at least includes steps of slurrying reaction, preimpregnation reaction, oxidizing leaching reaction and impurity removal. In the present solution, the step of preimpregnation reaction is independent from and before the step of oxidizing leaching, and the preimpregnation reaction is carried out on the material by first preparing an acid and then adding the material, so that part of sulfides of metal can be oxidized by virtue of high oxidizing property of high-concentration sulfuric acid.

In an optional solution, the step a specifically is: adding a solution into a slurrying device equipped with a stirring device, grinding the sulfide mineral for one time into a powder, and then pouring the powder into the slurrying device by means of pneumatic conveying at a positive pressure of 0.4-0.8 Mpa, to prepare a slurried solution.

A device for grinding the sulfide mineral for one time into the powder is a vertical roller mill.

Compared with the conventional ball mill, energy consumption of the vertical roller mill is lower, and meanwhile, the vertical mill is more wear-resistant. Specifically, the vertical roller mill is used for first grinding (a processing capacity of the vertical mill is 15 t/(h.300 KW.h), of which a processing capacity within unit time and energy consumption is 0.05 t/(h.KW.h), while for the ball mill, the processing capacity of is about 3 t/(h.100 KW.h), and the processing capacity within unit time and energy consumption is 0.03 t/(h.KW.h), and thus the energy consumption of the vertical mill is lower; meanwhile, a wear amount of a wear-resistant material (iron alloy material) of the vertical mill is about 5 g/t material, while the wear amount of the wear-resistant material (iron alloy material) of the ball mill is 1500 g/t material, and thus the wear amount of the wear-resistant material of the vertical mill is greatly reduced compared with that of the ball mill, and correspondingly consumption of adjuvants for iron purification is also greatly reduced.

The particle size D90 of the powder is smaller than or equal to 40 µm. A small particle size enables the powder to react more fully with the sulfuric acid in subsequent preimpregnation reaction and oxidizing leaching reaction.

The solution mixed and slurried with the material is water and/or the sulfate solution obtained after the step d of impurity removal. A mass ratio of liquid to solid in the slurried solution is 1.5-2:1, so as to satisfy requirements of the subsequent step b and step c.

Optionally, when the sulfide mineral is at least one of nickel sulfide mineral, high nickel matte, and low nickel matte, after the step c of oxidizing leaching reaction is completed, the method includes a step d of impurity removal: performing impurity removal on the leaching solution to render a sulfate solution.

It should be supplemented that the liquid in the step a is at least one of water, the leaching solution obtained from the step c of oxidizing leaching reaction, and the sulfate solution obtained after the step d of impurity removal.

Optionally, in the step b, a concentration of sulfuric acid in the sulfuric acid reaction solution is 150-300 g/L.

A temperature of the preimpregnation reaction is 65-80 °C; purity of the oxygen is greater than 90%, and an introduction rate of the oxygen is 10-60 Nm³/h.

A ratio of a flow rate of the oxygen to a flow rate of the slurried solution is oxygen flow rate : slurried solution flow rate = (7-10 Nm³/h) : (8-10 m³/h).

In the step b of preimpregnation process, the concentration of sulfuric acid is increased, and meanwhile, the preimpregnation reaction of the material is carried out by first preparing the acid and then adding the material, and in this way, at an appropriate temperature (65-80 °C), part of sulfides of metal can be oxidized by virtue of high oxidizing property of sulfuric acid with a higher concentration than in conventional leaching; and meanwhile, a small amount of oxygen with higher purity (purity being greater than 90%) is supplemented to improve an oxidation atmosphere of the preimpregnation reaction, so that on one hand, the oxidizing reaction of sulfides in the sulfidic mineral is accelerated, to destroy an intergranular structure of sulfides such as nickel sulfide and copper sulfide to the greatest extent, and on the other hand, the leaching reaction of elemental metal in the sulfide mineral is accelerated, thereby indirectly increasing a reaction rate of oxidizing sulfide at a normal pressure and a leaching rate of metal.

Optionally, in the step b, after the slurried solution is added, time of the preimpregnation reaction is 1.2-1.8 times the time for adding all the slurried solution formulated in the step a into the preimpregnation reaction device; after the slurried solution is completely added, time of the preimpregnation reaction is 0.8-1.5 h. In the present solution, the time of preimpregnation is 1.2-1.8 times the time for adding the slurried solution, mainly for the purpose of releasing hydrogen to the greatest extent.

Optionally, in the step b, the amount of the slurried solution added is calibrated by the amount of sulfuric acid in the preimpregnation reaction device; an amount of the slurried solution input is based on a mass of the sulfide mineral in the slurried solution; and a volume of the slurried solution added is V = M/N.

In the above, M is a mass of the sulfide mineral in the slurried solution to be added, and N is a mass percentage of the sulfide mineral in a unit volume of the slurried solution; M = (mass of sulfuric acid in preimpregnation reaction device × molar mass of metal element / molar mass of sulfuric acid) × 1.05 / [1 - (mass percentage of sulfur of sulfide mineral × molar mass of metal element / molar mass of sulfur element) / metal content of sulfide mineral].

Optionally, the step c of oxidizing leaching includes a normal-pressure leaching process and a pressurized leaching process; the oxidizing leaching reaction device includes a normal-pressure leaching reaction device and a pressurized leaching reaction device; the leaching solution is divided into a first leaching solution and a second leaching solution; and the leaching residue is divided into a first leaching residue and a second leaching residue.

The normal-pressure leaching process specifically includes: performing a normal-pressure oxidizing leaching reaction on the reaction solution, wherein oxygen is introduced during the reaction, and reaction time of the normal-pressure oxidizing leaching reaction is 2-13 h, and after completing the reaction, separating the slurried solution to render the first leaching solution and the first leaching residue. The normal-pressure leaching has a high safety factor and small investment, and the normal-pressure leaching can reduce load and investment of the pressurized leaching.

In the above, purity of oxygen is greater than 90%; a ratio of a flow rate of the oxygen to a flow rate of the slurried solution of the first leaching residue is oxygen flow rate : flow rate of slurried solution of first leaching residue = (7-10 Nm³/h) : (8-10 m³/h); a normal-pressure leaching reaction temperature is 60-90 °C.

In the present solution, the flow rate of the oxygen, the flow rate of the slurried solution, the liquid-solid ratio of the slurried solution, and the concentration of the sulfuric acid reaction solution are all precisely calculated and designed in advance, the material is precisely dosed, an alkaline characteristic of the material itself consuming hydrogen ions is used, and the material itself is used as a neutralization reagent for neutralization hydrolysis and reaction of iron-removing purification, thereby cutting down the technological processes and reducing addition of adjuvant.

Optionally, the normal-pressure leaching reaction device is a stirring reactor equipped with a super-energy oxidizer.

In the above, in the normal-pressure leaching process, a stirring rate of the stirring reactor is 50-120 r/min. The slurried solution flows out from an upper part of the stirring reactor and then flows into the super-energy oxidizer. The slurried solution and oxygen are mixed in the super-energy oxidizer, and then poured into the stirring reactor from a bottom of the stirring reactor. Through such reciprocating cycle, the oxygen is fully contacted with the material.

In the present technological method, the super-energy oxidizer that disperses oxygen by ultrasonic waves is provided to perform the normal-pressure oxidizing leaching, so that on one hand, oxygen with higher purity is utilized to carry out the oxidizing reaction, and on the other hand, the dispersion effect of oxygen is greatly improved by using ultrasonic waves, meanwhile, the material is ground to have a particle size of 40 µm or smaller, which greatly increases a specific surface area of the material and the contact area between the material and oxygen, and thus the reaction rate of oxidizing sulfide under a normal pressure and the leaching rate of metal can be greatly increased.

Optionally, the pressurized leaching process specifically includes: adding water to the first leaching residue obtained from the normal-pressure leaching reaction, slurrying the same into a slurried solution of the first leaching residue, and then conveying the slurried solution into a pressurized leaching reaction device loaded with a sulfuric acid reaction solution, and after completing the pressurized leaching reaction, performing solid-liquid separation, to render a second leaching solution and a second leaching residue.

In the above, time for adding water and slurrying is 0.5-2 h; a concentration of sulfuric acid in the sulfuric acid reaction solution in the pressurized leaching reaction device is 30-150 g/L; a pressure inside the pressurized leaching reaction device is 1-2 Mpa; after the temperature in the pressurized oxidizing leaching reaction kettle is raised to the initial temperature of 80-110 °C of the reaction, the pressurized oxidizing reaction starts vigorously; the reaction temperature is maintained at 140-180 °C by heat released by the reaction itself until the pressurized oxidizing reaction ends; and time of the pressurized leaching is 2-5 h.

Optionally, the step d specifically is: conveying the second leaching solution into an impurity-removing reaction device, adding an iron powder, and performing solid-liquid separation on the slurried solution having completed the reaction for removing copper through replacement by iron powder, to render a sulfate solution, wherein pH in the impurity-removing reaction device is 1-2, and a temperature is 60-80 °C.

Optionally, the method includes:
S1, grinding a sulfide mineral into a powder, to prepare a slurried solution;
S2, mixing the slurried solution with a sulfuric acid solution, and performing at least one operation of stirring, introducing oxygen and maintaining a reaction temperature during the mixing, so as to perform preactivation to render a preactivated slurried solution;
S3, performing normal-pressure leaching on the preactivated slurried solution, performing at least one operation of stirring and maintaining a normal-pressure leaching temperature in the normal-pressure leaching process, and meanwhile introducing oxygen, to render a normal-pressure leaching slurried solution after finishing reaction;
S4, filtering the normal-pressure leaching slurried solution to render a normal-pressure leaching residue and a normal-pressure leaching solution; and
S5, slurrying the normal-pressure leaching residue with addition of water, then adding the slurried normal-pressure leaching residue into a sulfuric acid solution for pressurized leaching, performing at least one operation of introducing oxygen, adjusting a gas pressure and adjusting an initial temperature of the pressurized leaching in the pressurized leaching process, and after full reaction, performing solid-liquid separation to render a pressurized leaching solution and a pressurized leaching residue.

Optionally, after S5, the leaching method includes: S6, performing impurity removal on the pressurized leaching solution, and performing filtration to render an impurity-removed leaching solution.

Optionally, S1 specifically is: grinding a sulfide mineral into a powder, and then pouring the powder into water by means of pneumatic conveying at a positive pressure of 0.4-0.8 Mpa to prepare a slurried solution, wherein a device for grinding the sulfide mineral into the powder is a high-energy ball mill; a particle size D90 of the powder is smaller than 40 µm; and a liquid-solid mass ratio in the slurried solution is (1.5-4): 1.

Optionally, in S2, a concentration of sulfuric acid in the sulfuric acid solution is 150-500 g/L; in S5, a concentration of sulfuric acid in the sulfuric acid solution is 20-160 g/L; an amount of the slurried solution used is determined by a mass of the sulfide mineral therein, and a mass of the sulfide mineral is determined by a mass of the sulfuric acid.

In the above, mass of sulfide mineral = (mass of sulfuric acid in sulfuric acid solution × molar mass of metal element to be leached / molar mass of sulfuric acid) × 1.05 / [1 - (mass percentage of sulfur in sulfide mineral × molar mass of metal element to be leached / molar mass of sulfur element)/ percentage content of metal element to be leached in sulfide mineral].

Optionally, in S2, a method of mixing the slurried solution with the sulfuric acid solution is adding the slurried solution into the sulfuric acid solution, wherein a rate of adding the slurried solution is 0.5-10 t/h; a stirring linear rate is 5-6 m/s; and a reaction temperature is maintained at 60-90 °C; a method of introducing oxygen is: dispersing oxygen into microbubbles by a microbubble reactor, and then injecting and introducing the microbubbles from below the liquid level of the preactivation reaction device, wherein a rate of introducing the oxygen is 1-10 Nm³/h, and purity of the oxygen is greater than 90%; reaction time of the preactivation is the time after adding the slurried solution, and preactivation time is 0.8-1.5 h.

Optionally, S3 specifically is: performing the normal-pressure leaching reaction in the normal-pressure leaching device; making a gas-liquid mixing pump connected to an oxygen source and communicate with a bottom of the normal-pressure leaching device; performing normal-pressure leaching on the preactivated slurried solution, and performing at least one operation of stirring and maintaining a normal-pressure leaching temperature in the normal-pressure leaching process, meanwhile mixing the slurried solution flowing out from an upper part of the normal-pressure leaching device with the oxygen pumped by the gas-liquid mixing pump, and then pumping the mixture back into the kettle from a lower part of the normal-pressure leaching device, to render a normal-pressure leaching slurried solution after the reaction ending.

Optionally, in S3, a stirring rate in the normal-pressure leaching is 50-120 r/min; a temperature in the normal-pressure leaching is maintained at 60-90 °C; an introduction rate of the oxygen is 10-60 Nm³/h, purity of the oxygen is greater than 90%; and time of the normal-pressure leaching is 2-13 h.

Optionally, in S5, time of the slurrying is 0.5-2 h; a gas pressure is raised and maintained at 1.4-1.8 Mpa by using high-pressure oxygen, and the purity of the oxygen is greater than 90%; an initial temperature of the pressurized leaching is 110-150 °C; and time of the pressurized leaching is 2-5 h.

Optionally, when the sulfide mineral is at least one or more of nickel sulfide, high nickel matte, and low nickel matte, S6 specifically is: adjusting a pH value and a temperature of the pressurized leaching solution, adding an LIX extractant, performing copper-removing purification by using a 4-section centrifugal extraction method, and then performing filtration to render an impurity-removed leaching solution.

Optionally, in S6, the pH value of the pressurized leaching solution is maintained at 1-2; the temperature of the pressurized leaching solution is maintained to be lower than or equal to 55 °C; and an organic formulation of the 4-section centrifugal extraction method is LIX extractant : solvent oil = (20%~30%) : (70%~80%).

Optionally, the method includes:
S1, grinding the sulfide mineral twice, and adding a concentrated sulfuric acid in the twice grinding to perform preactivation to render a material after twice grinding;
S2, performing normal-pressure leaching on the material having been ground twice in a sulfuric acid solution, to render a normal-pressure leaching slurry, wherein at least one operation of stirring, introducing oxygen and maintaining a normal-pressure leaching temperature is performed in the normal-pressure leaching process;
S3, filtering the normal-pressure leaching slurry to render a normal-pressure leaching residue and a normal-pressure leaching solution; and
S4, slurrying the normal-pressure leaching residue in a sulfuric acid solution, and then performing pressurized leaching, wherein at least one operation of introducing oxygen, adjusting a gas pressure and adjusting an initial temperature of the pressurized leaching is performed in the pressurized leaching process, and after full reaction, performing filtration to render a pressurized leaching residue and a pressurized leaching solution.

Optionally, after S4, the leaching method includes:
S5, performing impurity removal on the pressurized leaching solution, and performing filtration to render an impurity-removed leaching solution.

Optionally, in S1, the twice grinding includes first-stage grinding and second-stage grinding. In the second-stage grinding, a concentrated sulfuric acid is added to perform preactivation; a particle size of material after twice grinding needs to satisfy that, the particle size D90 of the material after first-stage grinding is smaller than 80 µm, and the particle size D90 of the material after twice grinding is smaller than 40 µm. A concentration of sulfuric acid in the concentrated sulfuric acid in S1 is 1400-1800 g/L, and an amount of the concentrated sulfuric acid added is 1.0-5.5% of a weight of the sulfide mineral; a rate of adding the concentrated sulfuric acid is 0.1-0.5 t/h; and the concentrated sulfuric acid is added by means of pipeline conveying and injecting. Optionally, a ball mill or a Raymond mill is used in the first-stage grinding for coarse grinding, and a tube mill, a vibration mill or a mechanical stirring mill is used in the second-stage grinding for fine grinding.

Optionally, in S2, the concentration of sulfuric acid in the sulfuric acid solution is 100-160 g/L; in S4, the concentration of sulfuric acid in the sulfuric acid solution is 10-100 g/L. Am amount of material used is determined by a mass of the sulfide mineral therein, and the mass of the sulfide mineral is determined by a mass of the sulfuric acid, wherein mass of sulfide mineral = (mass of total sulfuric acid × molar mass of metal element to be leached / molar mass of sulfuric acid) × 1.05 / [1 - (mass percentage of sulfur in sulfide mineral × molar mass of metal element to be leached / molar mass of sulfur element)/ percentage content of metal element to be leached in sulfide mineral].

Optionally, in S2, a device for the normal-pressure leaching reaction is a normal-pressure leaching device; an introduction rate of the oxygen is 10-60 Nm³/h, and purity of the oxygen is greater than 90%.

A device for introducing oxygen is an ultrasonic super-energy oxidizer, wherein the ultrasonic super-energy oxidizer is connected to an oxygen source and communicates with a bottom of the normal-pressure leaching device.

The oxygen is introduced in such a way that the ultrasonic super-energy oxidizer mixes the introduced oxygen and a slurry, which is obtained by mixing the material having been ground twice and flowing out from an upper part of the normal-pressure leaching device and the sulfuric acid solution, and pumps the same into the normal-pressure leaching device from the bottom of the normal-pressure leaching device.

Optionally, a stirring rate is 50-120 r/min.

Optionally, a temperature of the normal-pressure leaching is maintained at 60-90 °C.

Optionally, time of the normal-pressure leaching is 2-13 h.

Optionally, in S4, time of the slurrying is 0.5-2 h; a pressure is raised and maintained at 1.4-1.8 Mpa by using oxygen, and the purity of the oxygen is greater than 90%; and an initial temperature of the pressurized leaching is adjusted to be 120-140 °C.

Optionally, time of the pressurized leaching is 2-5 h.

Optionally, the sulfide mineral is at least one or more of nickel sulfide mineral, copper-cobalt sulfide mineral, cobalt-copper alloy, high nickel matte, and low nickel matte.

Optionally, when the sulfide mineral is at least one or more of nickel sulfide mineral, high nickel matte, and low nickel matte, S5 specifically is: adjusting pH and temperature of the pressurized leaching solution, adding an LIX extractant, performing copper-removing purification by using a 4-section centrifugal extraction method, and then performing filtration to render an impurity-removed leaching solution.

Optionally, in S5, pH of the pressurized leaching solution is maintained at 1-2; a temperature of the pressurized leaching solution is maintained to be lower than or equal to 55 °C; and an organic formulation ratio of the 4-section centrifugal extraction method is LIX extractant : solvent oil = (20%~30%) : (70%~80%).

### BRIEF DESCRIPTION OF DRAWINGS

In order to more clearly illustrate technical solutions in embodiments of the present invention or the prior art, drawings which need to be used in the description of the embodiments or the prior art will be briefly introduced below. Apparently, the drawings in the following description merely show some embodiments of the present invention, and those ordinarily skilled in the art still could obtain other drawings in light of these drawings, without using inventive efforts.

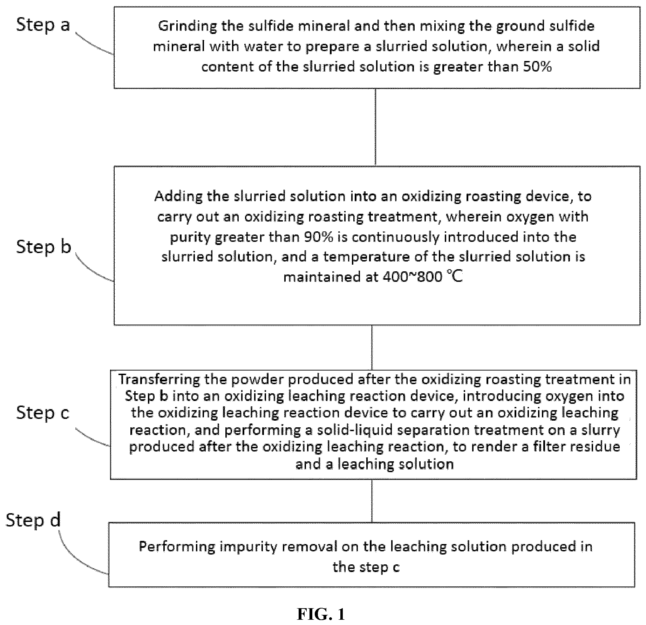

FIG. 1 is a schematic flow chart of a specific method of leaching sulfide mineral provided in examples of the present invention;

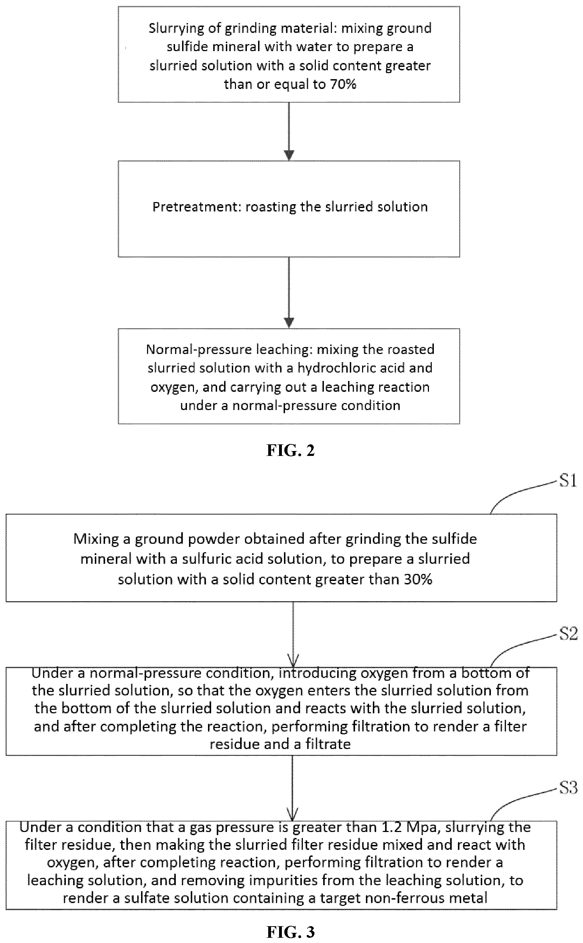

FIG. 2 is a flow chart of a method of leaching sulfide mineral provided in examples of the present invention;
FIG. 3 is a flow chart of a method of leaching sulfide mineral provided in examples of the present invention;

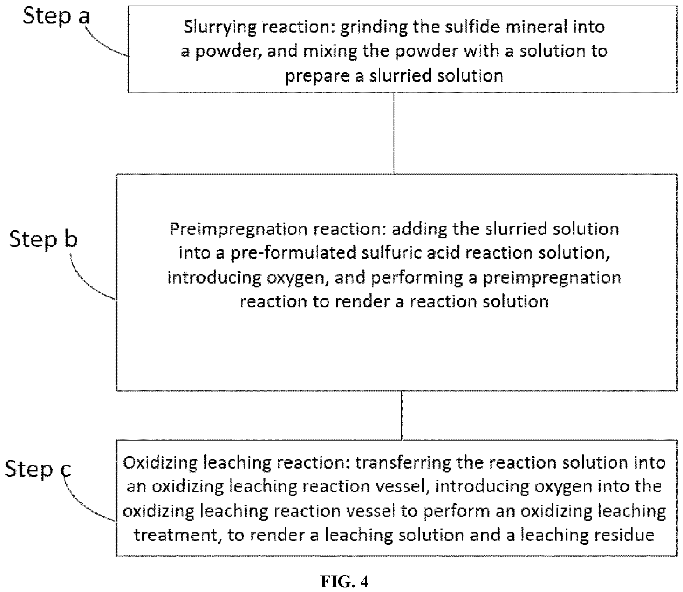

FIG. 4 is a flow chart of a method of leaching sulfide mineral provided in examples of the present invention;

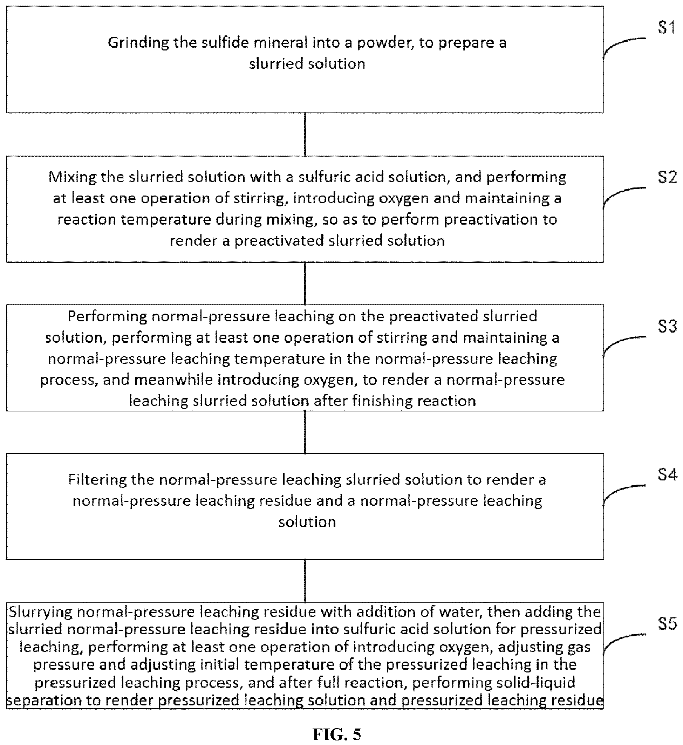

FIG. 5 is a flow chart of a method of leaching sulfide mineral provided in examples of the present invention;

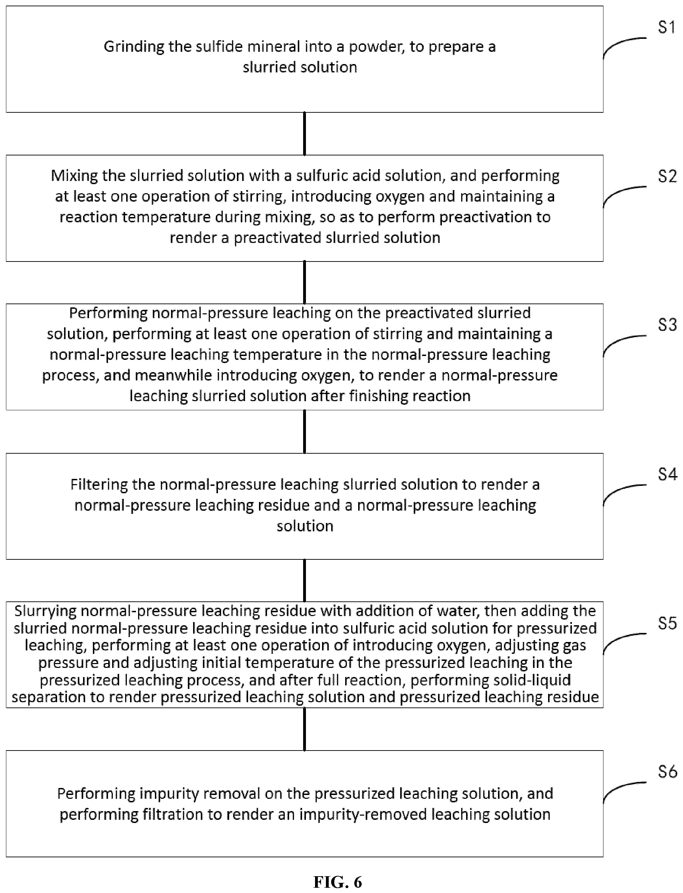

FIG. 6 is a flow chart of a method of leaching sulfide mineral provided in examples of the present invention;

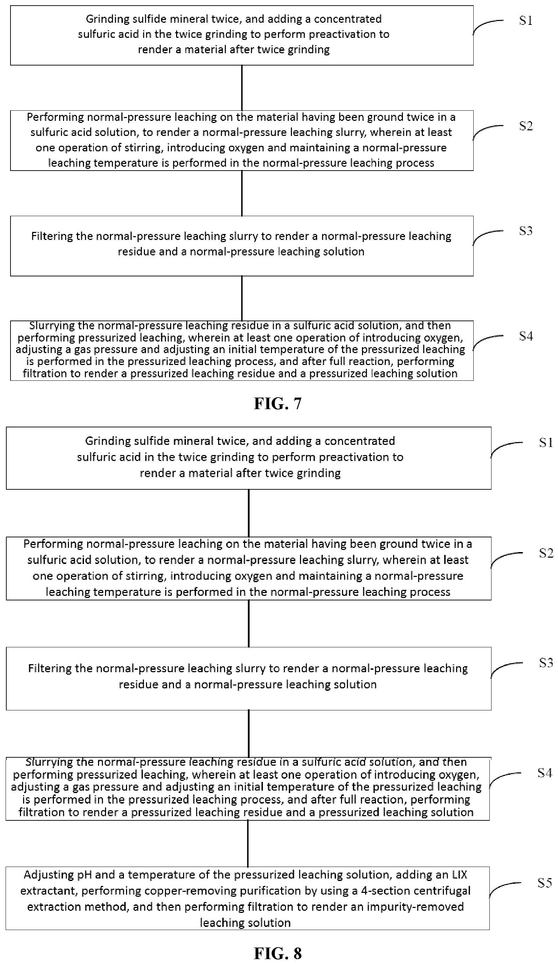

FIG. 7 is a flow chart of a method of leaching sulfide mineral provided in examples of the present invention; and
FIG. 8 is a flow chart of a method of leaching sulfide mineral provided in examples of the present invention.

### DETAILED DESCRIPTION OF EMBODIMENTS

In order to embody the advantages of the method provided in the present invention, illustration is given below in conjunction with specific examples, but the present invention is not limited thereto in any way.

### Example 1

The present example provides a method of leaching sulfide mineral, specifically including the following steps.

Nickel sulfide mineral particles 1.5 t containing 53% of nickel, 0.5% of copper, 4% of iron, and 28% of sulfur were ground twice into a fine powder. In the first time, the nickel sulfide mineral particles were coarsely ground by a ball mill, and after grinding, a first powder nickel sulfide had a particle size D90 of 80 µm. In a second stage, the first powder nickel sulfide was fed into a vibration mill and finely ground, and after grinding, a second powder nickel sulfide had the particle size D90 of 40 µm. Into a slurrying device water 1.5 m³ was added, and the second powder after the grinding was poured into the slurrying device equipped with a stirring device by means of pneumatic conveying at a positive pressure of 0.7 Mpa and slurried, to render a slurried solution with a solid content of 50%.

The slurried solution 3 t was added into a rotary roaster at a feeding rate of 2 t/h (ton/hour) and subjected to oxidizing roasting for 0.5 h, wherein oxygen with purity greater than 90% was continuously introduced into the slurried solution, and a roasting temperature was 700 °C.

Roasted material after the roasting was added into a stirring reactor and stirred, wherein a base solution in a reaction kettle was 139 g/L sulfuric acid reaction solution 10 m³, a stirring rate was 80 r/min, a temperature during reaction was controlled at 85 °C, and oxygen with a concentration greater than 90% was introduced into the kettle from a side of a bottom of the stirring reactor by a resonant oxygen injector at a rate of 30 Nm³/h. After 5 h of reaction, resultant was filtered to render a leaching solution 7.4 m³. It was measured that in the leaching solution, a nickel content was 97.8 g/L, a copper content was 0.92 g/L, and a leaching rate of nickel metal reached 91.1%. The leaching solution had a low content of copper, and copper did not need to be removed subsequently.

### Example 2

The present example provides a method of leaching sulfide mineral, specifically including the following steps.

Copper-cobalt sulfide mineral particles 1.5 t containing 13.7% of copper, 6% of cobalt, 15.2% of iron, and 12.6% of sulfur were ground twice into a fine powder. In the first time, the copper-cobalt sulfide mineral particles were coarsely ground by a Raymond mill, and after grinding, a first powder nickel sulfide had a particle size D90 of 70 µm. In a second stage, the first powder nickel sulfide was fed into a vibration mill and finely ground, and after grinding, a second powder nickel sulfide had the particle size D90 of 30 µm. Into a slurrying device water 1 m³ was added, and the second powder after the grinding was poured into the slurrying device equipped with a stirring device by means of pneumatic conveying at a positive pressure of 0.9 Mpa and slurried, to render a slurried solution with a solid content of 60%.

The slurried solution 3 t after the grinding was added into a rotary roaster at a feeding rate of 2 t/h and subjected to oxidizing roasting for 0.2 h, wherein oxygen with purity greater than 90% was continuously introduced into the slurried solution, and a roasting temperature was 800 °C.

Roasted material after the roasting was added into a stirring reactor and stirred, wherein a base solution in a reaction kettle was 100 g/L sulfuric acid reaction solution 9.1 m³, a stirring rate was 120 r/min, a temperature during reaction was controlled at 65 °C, and oxygen with a concentration greater than 90% was introduced into the kettle from a side of a bottom of the stirring reactor by a resonant oxygen injector at a rate of 40 Nm³/h. After 4 h of reaction, resultant was filtered to render a leaching solution 8 m³. It was measured that in the leaching solution, a copper content was 24.0 g/L, a leaching rate of copper metal reached 93.4%, a cobalt content of the solution was 10.2%, and a leaching rate of cobalt metal reached 91.0%. The leaching solution was subjected to iron-removing purification by an iron vitriol method.

### Example 3

Sulfide mineral: copper-cobalt alloy containing 65% of copper, 2.5% of cobalt, 24.66% of iron, and 3% of sulfur.

Extraction equipment: the same as that in Example 2.

Extraction steps: the same as those in Example 2.

Design parameters: the sulfuric acid reaction solution had a concentration of 155 g/L and was added in an amount of 15 m³, and other parameters were the same as those in Example 2.

Detection results: in a leaching solution 13 m³, a copper content was 71.0 g/L, a leaching rate of copper metal reached 95.0%, a cobalt content was 2.73 g/L, and a leaching rate of cobalt metal reached 95.0%.

### Example 4

Sulfide mineral: high nickel matte containing 71% of nickel, 1% of iron, and 20% of sulfur.

Extraction equipment: the same as that in Example 1.

Extraction steps: the same as those in Example 1.

Design parameters: the sulfuric acid reaction solution had a concentration of 155 g/L and was added in an amount of 12 m³, and other parameters were the same as those in Example 1.

Detection results: in a leaching solution 10 m³, a nickel content was 99.2 g/L, and a leaching rate of nickel metal reached 93.5%.

### Example 5

Sulfide mineral: low nickel matte containing 31.08% of nickel, 35% of iron, and 27% of sulfur.

Extraction equipment: the same as that in Example 1.

Extraction steps: the same as those in Example 1.

Design parameters: the sulfuric acid reaction solution had a concentration of 149 g/L and was added in an amount of 12 m³, and other parameters were the same as those in Example 1.

Detection results: in a leaching solution 10 m³, a nickel content was 43.2 g/L, and a leaching rate of nickel metal reached 92.7%.

A series of comparative examples are designed below to illustrate beneficial effects of the solutions of the present invention.

### Comparative Example 1

Sulfide mineral: high nickel matte containing 71% of nickel, 1% of iron, and 20% of sulfur.

Extraction equipment: without equipment for oxidizing roasting, other parameters were the same as in those in Example 4.

Extraction steps: without oxidizing roasting treatment, it directly entered a normal-pressure leaching stage, and other parameters were the same as in those in Example 4.

Design parameters: the same as those in Example 4.

Detection results: in a leaching solution 10 m³, a nickel concentration was only 31.9 g/L, and a leaching rate of nickel was 30.0%. It can thus be seen that without oxidizing roasting procedure, an effect of leaching metal is greatly compromised, reduced by 63.5%.

### Comparative Example 2

Sulfide mineral: high nickel matte containing 71% of nickel, 1% of iron, and 20% of sulfur.

Extraction equipment: without equipment for second-stage fine grinding, other parameters were the same as in those in Example 4.

Extraction steps: without second-stage fine grinding, the particle size of the high nickel matte was 80 µm, and other parameters were the same as in those in Example 4.

Design parameters: the same as those in Example 4.

Detection results: in a leaching solution 10 m³, a nickel concentration was only 73.1 g/L, and a leaching rate of nickel was 69.2%. It can thus be seen that when the grinding particle size does not meet design requirement, the leaching rate is greatly reduced, with reduction of 24.3% compared with the leaching rate in an experimental group with two-stage grinding.

### Comparative Example 3

Sulfide mineral: high nickel matte containing 71% of nickel, 1% of iron, and 20% of sulfur.

Extraction equipment: without resonant oxygen injector, other parameters were the same as those in Example 4.

Extraction steps: during oxidizing leaching, oxygen was not introduced by the resonant oxygen injector and was directly supplied into the reaction kettle through an oxygen pipeline, and other parameters were the same as those in Example 4.

Design parameters: the same as those in Example 4.

Detection results: in a leaching solution 10 m³, a nickel concentration was only 78.0 g/L, and a leaching rate of nickel was 73.3%. It can thus been seen that the oxygen injector can increase a contact area between oxygen and material and increase an oxygen utilization rate and a reaction rate, and the leaching rate of nickel metal obtained by directly introducing oxygen is reduced by 20.2% compared with that in a designed process.

The concentrations of nickel and the leaching rates of nickel in the leaching solutions in Example 4 and Comparative Examples 1-3 where the conventional procedures were used are recorded in Table 1.

**Table 1 Statistical Table of Nickel Concentrations and Leaching Rates of Nickel in Example 4 and Comparative Examples 1-3**

| | Nickel Concentration (g/L) | Leaching Rate of Nickel (%) |
|---|---|---|
| Example 4 | 99.2 | 93.5 |
| Comparative Example 1 | 31.9 | 30.0 |
| Comparative Example 2 | 73.1 | 69.2 |
| Comparative Example 3 | 78.0 | 73.3 |

As can be seen from Table 1, compared with the leaching technology provided in the present invention, in the conventional procedures, without oxidizing roasting procedure, the effect of leaching metal is greatly compromised; when the grinding particle size does not meet the design requirement, the leaching rate is also greatly reduced; and in addition, the oxygen injector can increase the contact area between oxygen and material and increase the oxygen utilization rate and the reaction rate.

In conclusion, in the present solutions, by pretreating the sulfide mineral by oxidizing roasting, on one hand, oxidizing reaction of sulfide in the sulfide mineral is accelerated, and on the other hand, leaching reaction of elemental metal in the sulfide mineral is accelerated.

By dispersing oxygen by the resonant oxygen injector for normal-pressure oxidizing leaching, on one hand, oxygen with higher purity is utilized to conduct the oxidizing reaction, and on the other hand, by dispersing oxygen into microbubbles by the resonant oxygen injector and injecting the microbubbles 5 meters below a liquid level of the reaction kettle, dispersion effect of oxygen is greatly improved.

In addition, by grinding the material to have the particle size of about 40 µm through two-stage grinding, the grinding effect is far superior to that of the particle size of about 80 µm through only one-stage grinding, a specific surface area of the material and the contact area between the material and oxygen are greatly increased, and in this way, the reaction rate of oxidizing sulfide under a normal pressure and the leaching rate of metal can be greatly increased.

The above examples of the present invention can accomplish complete leaching without high-pressure leaching, can greatly improve the leaching rate of metal of sulfide mineral under a normal-pressure condition, and meanwhile greatly reduce leaching and purifying costs of sulfide mineral.

### Example 6

Nickel in nickel sulfide mineral was leached through following steps:
(1) Slurrying of grinding material: nickel sulfide mineral 1.5 t containing 53% of nickel, 0.5% of copper, 4% of iron, and 28% of sulfur was ground twice. Firstly in a first stage, the nickel sulfide mineral was coarsely ground by a ball mill, and after grinding, a particle size of the nickel sulfide met a requirement that the particle size D90 was 80 µm. In a second stage, the ground nickel sulfide was fed into a sand mill and finely ground, and after grinding, the particle size of the nickel sulfide met a requirement that the particle size D90 was 40 µm. A nickel sulfide powder having undergone two-stage grinding was poured into a water-filled slurrying kettle, where a stirring device was started, by means of pneumatic conveying at a positive pressure of 0.4 Mpa, to prepare a slurried solution with a solid content of 70% for later use.
(2) Pretreatment: the slurried solution formulated was added into a rotary roaster at a feeding rate of 2 t/h and subjected to oxidizing roasting for 0.4 h. During oxidizing roasting reaction, oxygen with purity of 92% was introduced, and a roasting temperature was controlled at 650 °C.
(3) Normal-pressure leaching: roasted material was added into a reaction kettle and stirred, wherein a base solution in the reaction kettle was 60 g/L hydrochloric acid 16.5 m³, a stirring rate was 100 r/min, a temperature during reaction was controlled at 60 °C. Mixture of the roasted material and hydrochloric acid was cyclically conveyed into a reactor and stirred, and oxygen with a concentration of 92% was introduced into the reaction kettle by an ultrasonic super-energy oxidizer at a rate of 30 Nm³/h to be mixed with the roasted material and hydrochloric acid. After an oxidizing leaching reaction was conducted for 8 h, resultant was filtered to render a filter residue and a leaching solution 15 m³, wherein a nickel content was 34.5 g/L, and a leaching rate of nickel metal reached 65.1%.
(4) Impurity removal:

The leaching solution from normal-pressure leaching stage was conveyed into a reaction kettle for removing copper through replacement by iron powder, pH for removing impurities was controlled to be 2, a temperature of removing impurities was 70 °C, an iron powder was added to carry out a reaction of removing copper through replacement by the iron powder, then purification was carried out by removing iron by a hydrolysis method, resultant was filtered, and slurry having completed the reaction was subjected to solid-liquid separation to render a nickel chloride solution, where a copper content was less than 1 g/L.

### Example 7

Copper and cobalt in copper-cobalt sulfide mineral were leached through following steps.
(1) Slurrying of grinding material: copper-cobalt sulfide mineral 4.05 t containing 13.7% of copper, 6% of cobalt, 15.2% of iron, and 12.6% of sulfur was ground twice. Firstly in a first stage, the copper-cobalt sulfide mineral was coarsely ground by a Raymond mill, and after grinding, a particle size of the copper-cobalt sulfide mineral met a requirement that the particle size D90 was 70 µm. In a second stage, the ground copper-cobalt sulfide mineral was fed into a mechanical stirring mill and finely ground, and after grinding, the particle size of the copper-cobalt sulfide mineral met a requirement that the particle size D90 was 30 µm. A copper-cobalt sulfide mineral powder having undergone two-stage grinding was poured into a water-filled slurrying kettle, where a stirring device was started, by means of pneumatic conveying at a positive pressure of 0.5 Mpa, to prepare a slurried solution with a solid content of 75% for later use.
(2) Pretreatment: the slurried solution formulated was added into a rotary roaster at a feeding rate of 4 t/h and subjected to oxidizing roasting for 0.5 h. During oxidizing roasting reaction, oxygen with purity of 92% was introduced, and a roasting temperature was controlled at 800 °C.
(3) Normal-pressure leaching: roasted material was added into a reaction kettle and stirred. A base solution in the reaction kettle was 80 g/L hydrochloric acid 8.2 m³. A stirring rate was 120 r/min. A temperature during reaction was controlled at 90 °C. Mixture of the roasted material and hydrochloric acid was cyclically conveyed into a reactor and stirred, and oxygen with a concentration of 92% was introduced into the reaction kettle by an ultrasonic super-energy oxidizer at a rate of 40 Nm³/h to be mixed with the roasted material and hydrochloric acid. After an oxidizing leaching reaction was conducted for 8 h, resultant was filtered to render a filter residue and a leaching solution 7 m³. The leaching solution was tested, wherein a copper content was 18.9 g/L, a leaching rate of copper metal reached 64.2%, a cobalt content was 8.2 g/L, and a leaching rate of cobalt metal reached 63.5%.

### Example 8

Sulfide mineral: copper-cobalt alloy containing 65% of copper, 2.5% of cobalt, 24.66% of iron, and 3% of sulfur.

Extraction equipment: the same as that in Example 7.

Extraction steps: the same as those in Example 7.

Design parameters: the hydrochloric acid solution had a concentration of 168 g/L and was added in an amount of 10 m³, and other parameters were the same as those in Example 7.

Detection results: in a leaching solution 8.5 m³, a copper content was 109.2 g/L, a leaching rate of copper metal reached 95.2%, a cobalt content was 4.2 g/L, and a leaching rate of cobalt metal reached 95.4%.

### Example 9

Sulfide mineral: high nickel matte containing 71% of nickel, 1% of iron, and 20% of sulfur.

Extraction equipment: the same as that in Example 6.

Extraction steps: the same as those in Example 6.

Design parameters: the hydrochloric acid solution had a concentration of 130 g/L and was added in an amount of 10.4 m³, and other parameters were the same as those in Example 6.

Detection results: in a leaching solution 9 m³, a nickel content was 76.3 g/L, and a leaching rate of nickel metal reached 64.5%.

### Example 10

Sulfide mineral: low nickel matte containing 31.08% of nickel, 35% of iron, and 27% of sulfur.

Extraction equipment: the same as that in Example 6.

Extraction steps: the same as those in Example 6.

Design parameters: the hydrochloric acid solution had a concentration of 130 g/L and was added in an amount of 10 m³, and other parameters were the same as those in Example 6.

Detection results: in a leaching solution 8.5 m³, a nickel content was 35.6 g/L, and a leaching rate of nickel metal reached 65.0%.

### Comparative Example 4 (without oxidizing roasting)

Sulfide mineral: high nickel matte containing 71% of nickel, 1% of iron, and 20% of sulfur.

Extraction equipment: without equipment for oxidizing roasting, other parameters were the same as in those in Example 4.

Extraction steps: without oxidizing roasting treatment, it directly entered a normal-pressure leaching stage, and other parameters were the same as in those in Example 9.

Design parameters: the same as those in Example 9.

Detection results: in a leaching solution 9 m³, a nickel concentration was 36.2 g/L, and a leaching rate of nickel was 30.6%. It can thus be seen that without oxidizing roasting procedure, an effect of leaching metal is greatly compromised, reduced by 33.9%.

### Comparative Example 5 (without second-stage fine grinding)

Sulfide mineral: high nickel matte containing 71% of nickel, 1% of iron, and 20% of sulfur.

Extraction equipment: without equipment for second-stage fine grinding, other parameters were the same as in those in Example 9.

Extraction steps: without second-stage fine grinding, the particle size of the high nickel matte was 70 µm, and other parameters were the same as in those in Example 9.

Design parameters: the same as those in Example 9.

Detection results: in a leaching solution 9 m³, a nickel concentration was only 57.3 g/L, and a leaching rate of nickel was 48.4%. It can thus be seen that when the grinding particle size does not meet design requirement, the leaching rate is greatly reduced, with reduction of 16.1% compared with a mode with second-stage grinding.

### Comparative Example 6 (with different oxygen pumping device)

Sulfide mineral: high nickel matte containing 71% of nickel, 1% of iron, and 20% of sulfur.

Extraction device: without ultrasonic super-energy oxidizer, oxygen was directly supplied into the reaction kettle through an oxygen pipeline, and other parameters were the same as those in Example 9.

Extraction steps: oxidative leaching did not introduce oxygen through an ultrasonic super-energy oxidizer, but the oxygen was directly supplied to the reactor through an oxygen pipeline. Other parameters were the same as in Example 9.

Design parameters: the same as those in Example 9.

Detection results: in a leaching solution 9 m³, a nickel concentration was only 51.0 g/L, and a leaching rate of nickel was 43.1%. It can thus be seen that the ultrasonic super-energy oxidizer can increase the contact area between oxygen and material and increase an oxygen utilization rate and a reaction rate, and the leaching rate of nickel metal obtained by directly introducing oxygen is reduced by 21.4% compared with that in a designed process.

### Comparative Example 7 (low solid content)

Sulfide mineral: high nickel matte containing 71% of nickel, 1% of iron, and 20% of sulfur.

Extraction equipment: the same as that in Example 9.

Extraction steps: the hydrochloric acid solution had a concentration of 130 g/L and was added in an amount of 10.4 m³, the solid content was made to be 50%, and other parameters were the same as those in Example 9. (A total amount of hydrochloric acid was not reduced)

Design parameters: the same as those in Example 9.

Detection results: in a leaching solution 9 m³, a nickel concentration was 65.7 g/L, and a leaching rate of nickel reached 55.5%. It can thus be seen that when the solid content is low, the leaching rate of nickel metal is reduced by 9.0% compared with that in the designed process.

Table 2 shows leaching results of sulfide minerals in the above examples.

| | Sulfide Mineral Raw Material | Leached Metal | Leaching Rate in Normal-pressure Oxidizing Stage |
|---|---|---|---|
| Example 6 | Nickel sulfide mineral | Nickel | Leaching rate of nickel 65.1% |
| Example 7 | Copper-cobalt sulfide mineral | Copper, cobalt | Leaching rate of coper 64.2%, leaching rate of cobalt 63.5% |
| Example 8 | Copper-cobalt alloy | Copper, cobalt | Leaching rate of coper 95.2%, leaching rate of cobalt 95.4% |
| Example 9 | High nickel matte | Nickel | Leaching rate of nickel 64.5% |
| Example 10 | Low nickel matte | Nickel | Leaching rate of nickel 65.0% |

Table 3 shows leaching results of sulfide minerals in the above comparative examples.

| | Difference between Example and Comparative Example (except the following differences, other leaching steps were carried out in the same way as in Example 9) | Leaching Rate in Normal-pressure Oxidizing Stage | Leaching Rate Difference (leaching rate in Example - leaching rate in Comparative Example) |
|---|---|---|---|
| Comparative Example 4 | Without oxidizing roasting pretreatment | 30.6% | 33.9% |
| Example 9 | Oxidizing roasting pretreatment was carried out | 64.5% | |
| Comparative Example 5 | Without second-stage fine grinding, particle size of high nickel matte was 70 µm | 48.4% | 16.1% |
| Example 9 | Second-stage fine grinding was carried out, particle size of high nickel matte was 40 µm | 64.5% | |
| Comparative Example 6 | Ultrasonic super-energy oxidizer was not provided in normal-pressure oxidizing stage, oxygen was directly supplied into reaction kettle through oxygen pipeline | 43.1% | 21.4% |
| Example 9 | Oxygen was introduced into the reaction kettle by ultrasonic super-energy oxidizer in normal-pressure oxidizing stage | 64.5% | |
| Comparative Example 7 | Ground material was prepared into slurry with solid content of 50% | 55.5% | 9.0% |
| Example 9 | Ground material was prepared into slurry with solid content of 70% | 64.5% | |

### Example 11

Nickel in nickel sulfide mineral was leached through following steps.

Nickel sulfide mineral 4.05 t containing 53% of nickel, 0.5% of copper, 4% of iron, and 28% of sulfur was ground by a vertical roller mill to have a particle size D90 of 40 µm.

A stirring device was started, and a ground powder was poured into a slurrying kettle loaded with a sulfuric acid solution 24 m³ with a concentration of 157 g/L by means of pneumatic conveying at a positive pressure of 0.45 Mpa, to formulate a slurried solution.

Pneumatic stirring was started. The slurried solution was pumped by a slurry pump into a Pachuca tank from a top of the Pachuca tank at a feeding rate of 2 t/h. Oxygen with purity greater than 90% was introduced from a bottom of the Pachuca tank by a resonant oxygen injector connected to the bottom of the Pachuca tank (an interval between a liquid level of the slurried solution in the tank and an inlet of oxygen was 5.5 m, the same below), wherein an introduction rate of the oxygen was 60 Nm³/h, a normal-pressure condition was maintained in the Pachuca tank, and a reaction temperature was 80 °C. After 4 h of reaction, resultant was filtered to render a filter residue and a filtrate 20 m³, wherein in the filtrate, a nickel concentration was 64.8 g/L, and then a leaching rate of nickel in a normal-pressure stage was 60.4%.

The filter residue filtered above was mixed and slurried with a sulfuric acid solution 15 m³ with a concentration of 50 g/L, resultant was then added into a pressurized reaction kettle. A gas pressure in the pressurized reaction kettle was maintained at 1.8 MPa by using high-pressure oxygen. After a temperature in the pressurized reaction kettle was raised to 120 °C, a pressurized oxidizing reaction started violently, and the reaction temperature was maintained at 160 °C or above by heat released by the reaction itself. After the pressurized oxidizing reaction was conducted for 4 h, the reacted slurry was filtered to render a leaching solution 10 m³. A nickel concentration in the leaching solution was 81.1 g/L, and then a leaching rate of nickel in a pressurized stage was about 37.8%, and an overall leaching rate of nickel in two stages was 98.2%.

The leaching solution having undergone pressurized oxidizing leaching and filtration was conveyed into a reaction kettle for removing impurities, pH of reaction was controlled at 1.5, a reaction temperature was 80 °C, an LIX extractant was added, and impurity-removing purification was carried out by a 6-section box-type extraction method. In the above, processing conditions of the 6-section box-type extraction method were as follows: a volume proportion of a solvent oil in an organic phase was 70%, a volume proportion of the LIX extractant was 30%, an extraction temperature was 55 °C, and each extraction section of the 6-section box-type extraction method included two stages of extraction, wherein reaction time of each stage of extraction was 8 min, and clarification time was 30 min.

### Example 12

Copper in copper-cobalt sulfide mineral was leached through following steps.

Copper-cobalt sulfide mineral 4.05 t, produced by pyrometallurgy and containing 13.7% of copper, 6% of cobalt, 15.2% of iron, and 12.6% of sulfur, was ground by a vertical roller mill to have a particle size D90 of 30 µm.

A stirring device was started, and ground powder was poured into a slurrying kettle loaded with a sulfuric acid solution 24 m³ with a concentration of 102 g/L by means of pneumatic conveying at a positive pressure of 0.75 Mpa, to formulate a slurried solution.

Pneumatic stirring was started. The slurried solution was pumped by a slurry pump into a Pachuca tank from a top of the Pachuca tank at a feeding rate of 3 t/h. Oxygen with purity greater than 90% was introduced from a bottom of the Pachuca tank by a resonant oxygen injector connected to the bottom of the Pachuca tank, wherein an introduction rate of the oxygen was 10 Nm³/h, and a normal-pressure condition was maintained in the Pachuca tank, and a reaction temperature was 70 °C. After 6 h of reaction, resultant was filtered to render a filter residue and a filtrate 20 m³, wherein in the filtrate, a copper concentration was 17.2 g/L, and a cobalt concentration was 7.4 g/L, and then a leaching rate of copper in a normal-pressure stage was 62.2%, and a leaching rate of cobalt in the normal-pressure stage was 60.7%.

The filter residue filtered above was mixed and slurried with a sulfuric acid solution 15 m³ with a concentration of 40 g/L, resultant was then added into a pressurized reaction kettle. A gas pressure in the pressurized reaction kettle was maintained at 1.8 Mpa by using high-pressure oxygen. After a temperature in the pressurized reaction kettle was raised to 130 °C, a pressurized oxidizing reaction started violently, and the reaction temperature was maintained at 160 °C or above by heat released by the reaction itself. After the pressurized oxidizing reaction was conducted for 3 h, the reacted slurry was filtered to render a leaching solution 10 m³. In the leaching solution, a copper concentration was 20.5 g/L and a cobalt concentration was 9.3 g/L, and then a leaching rate of copper in a pressurized stage was 36.9%, a leaching rate of cobalt in the pressurized stage was 38.2%, an overall leaching rate of copper in the two stages was 99.1%, and an overall leaching rate of cobalt in the two stages was 98.9%.

### Example 13

Sulfide mineral: cobalt-copper alloy containing 65% of copper, 2.5% of cobalt, 24.66% of iron, and 3% of sulfur.

Extraction equipment: the same as that in Example 12.

Extraction steps: the same as those in Example 12.

Design parameters: a concentration of the sulfuric acid solution in the normal-pressure leaching was 260 g/L, a concentration of the sulfuric acid solution in the pressurized-pressure leaching was 80 g/L, and other parameters were the same as those in Example 12.

Detection results: a normal-pressure leaching solution 20 m³ contained 120.6 g/L copper and 4.6 g/L cobalt, a leaching rate of copper in the normal-pressure stage was 91.6%, and a leaching rate of cobalt in the normal-pressure stage was 90.9%.

It was detected that the pressurized leaching solution 15 m³ contained 12.5 g/L copper and 0.56 g/L cobalt, a leaching rate of copper in the pressurized stage was 7.1%, and a leaching rate of cobalt in the pressurized stage was 8.3%. An overall normal-pressure and pressurized leaching rate of copper was 98.7%, and an overall normal-pressure and pressurized leaching rate of cobalt was 99.2%.

### Example 14

Sulfide mineral: high nickel matte containing 71% of nickel, 1% of iron, and 20% of sulfur.

Extraction equipment: the same as that in Example 11.

Extraction steps: the same as those in Example 11.

Design parameters: a concentration of the sulfuric acid solution in the normal-pressure leaching was 210 g/L, and other parameters were the same as those in Example 11.

Detection results: a normal-pressure leaching solution 20 m³ contained 92.0 g/L nickel, and a leaching rate of nickel in a normal-pressure stage was 64.0%.

It was detected that a leaching solution 15 m³ in a pressurized stage contained 67.1 g/L nickel, a leaching rate of nickel in the pressurized stage was 35.0%, and an overall normal-pressure and pressurized leaching rate of nickel was 99.0%.

### Example 15

Sulfide mineral: low nickel matte containing 31.08% of nickel, 35% of iron, and 27% of sulfur.

Extraction equipment: the same as that in Example 11.

Extraction steps: the same as those in Example 11.

Design parameters: a concentration of the sulfuric acid solution in the normal-pressure leaching was 200 g/L, and other parameters were the same as those in Example 11.

Detection results: a normal-pressure leaching solution 20 m³ contained 39.4 g/L nickel, and a leaching rate of nickel in the normal-pressure stage was 62.6%.

It was detected that a pressurized leaching solution 15 m³ in the pressurized stage contained 29.3 g/L nickel, a leaching rate of nickel in the pressurized stage was 34.9%, and an overall normal-pressure and pressurized leaching rate of nickel was 97.5%.

### Comparative Example 8

Sulfide mineral: high nickel matte containing 71% of nickel, 1% of iron, and 20% of sulfur.

Extraction equipment: the same as that in Example 14.

Extraction steps: acid was not added after grinding, only water was added for slurrying, and other design parameters were the same as those in Example 14.

Design parameters: the same as those in Example 14.

Detection results: a normal-pressure leaching solution 20 m³ contained 73.6 g/L nickel, and a leaching rate of nickel in the normal-pressure stage was 51.2%, reduced by 12.8.

### Comparative Example 9

Sulfide mineral: high nickel matte containing 71% of nickel, 1% of iron, and 20% of sulfur.

Extraction equipment: the same as that in Example 14.

Extraction steps: a grinding particle size was 80 µm, and other parameters were the same as in those in Example 14.

Design parameters: the same as those in Example 14.

Detection results: a normal-pressure leaching solution 20 m³ contained 69.1 g/L nickel, and a leaching rate of nickel in the normal-pressure stage was 48.1%, reduced by 15.9.

### Comparative Example 10

Sulfide mineral: high nickel matte containing 71% of nickel, 1% of iron, and 20% of sulfur.

Extraction equipment: a conventional mechanical stirring reaction kettle was used to replace the Pachuca tank, and other design parameters were the same as those in Example 14.

Extraction steps: the same as in those in Example 14.

Design parameters: the same as those in Example 14.

Detection results: a normal-pressure leaching solution 20 m³ contained 62.5 g/L nickel, and a leaching rate of nickel in the normal-pressure stage was 43.5%, reduced by 20.5.

Table 4 shows leaching results of sulfide minerals in the above examples.

| | Sulfide Mineral Raw Material | Leached Metal | Leaching Rate in Normal-pressure Oxidizing Stage | Total Leaching Rate |
|---|---|---|---|---|
| Example 11 | Nickel sulfide mineral | Nickel | 60.4% | 98.2% |
| Example 12 | Copper-cobalt sulfide mineral | Copper | 62.2% | 99.1% |
| | Copper-cobalt sulfide mineral | Cobalt | 60.7% | 98.9% |
| Example 13 | Copper-cobalt alloy | Copper | 91.6% | 98.7% |
| | Copper-cobalt alloy | Cobalt | 90.9% | 99.2% |
| Example 14 | High nickel matte | Nickel | 64.0% | 99.0% |
| Example 15 | Low nickel matte | Nickel | 62.6% | 97.5% |

Table 5 shows leaching results of sulfide minerals in the above comparative examples.

| | Difference between Example and Comparative Example (except the following differences, other leaching steps were carried out in the same way as in Example) | Leaching Rate in Normal-pressure Oxidizing Stage | Leaching Rate Difference (leaching rate in Example - leaching rate in Comparative Example) |
|---|---|---|---|
| Comparative Example 8 | Acid was not added after grinding, only water was added for slurrying | 51.2% | 12.8% |
| Example 14 | Sulfuric acid solution was added after grinding for slurrying | 64.0% | |
| Comparative Example 9 | Particle size D90 of high nickel matte after grinding was 80 µm | 48.1% | 15.9% |
| Example 14 | Particle size D90 of high nickel matte after grinding was 40 µm | 64.0% | |
| Comparative Example 10 | Conventional mechanical stirring reaction kettle was used in normal-pressure oxidizing stage | 43.5% | 20.5% |
| Example 14 | Pachuca tank was used in normal-pressure oxidizing stage | 64.0% | |

As can be seen in conjunction with data about the above examples and comparative examples in Tables 4 and 5, by the method of leaching sulfide mineral provided in the present invention, a leaching rate of 60% or more can be achieved in the normal-pressure oxidizing stage, and the leaching rate finally is close to 100%. Furthermore, as can be seen from Comparative Example 8, if the sulfide mineral powder is slurried with water instead of sulfuric acid, the leaching rate in the normal-pressure oxidizing stage will be greatly reduced. As can be seen from Comparative Example 9, if the grinding particle size of the sulfide mineral powder does not meet the requirement, the leaching rate thereof in the normal-pressure oxidizing stage will be greatly reduced. As can be seen from Comparative Example 10, if the resonant oxygen injector and the Pachuca tank are not used for reaction in the normal-pressure oxidizing stage, but the conventional mechanical stirring reaction kettle and the conventional oxygen introduction mode are used, the leaching rate thereof in the normal-pressure oxidizing stage will be greatly reduced. It can thus be seen that the present invention can, by improving the technological process of leaching, greatly improve the leaching rate in the normal-pressure oxidizing stage. Compared with the conventional leaching technology of sulfide mineral, as the present invention improves the leaching rate in the normal-pressure stage, the amount of process steps and high-pressure reaction equipment in the pressurized oxidizing stage can be appropriately reduced, thereby reducing processing costs of sulfide mineral.

### Example 16 (nickel sulfide mineral)

Step a of slurrying reaction: nickel sulfide mineral 4.05 t containing 50% of nickel, 0.1% of copper, 4% of iron, and 18% of sulfur was ground by a vertical roller mill into a powder with D90 reaching 40 µm. Into a slurrying kettle where a stirring device was started, water 8 m³ was added; and the powder was added into the slurrying kettle by means of pneumatic conveying at a positive pressure of 0.8 Mpa, to prepare a slurried solution with a liquid-solid ratio of 2:1 for later use.

Step b of preimpregnation reaction: a sulfate solution 8 m³ (with a nickel concentration of 94 g/L) produced by removing impurities, water 4 m³ and a concentrated sulfuric acid were prepared in a preimpregnation reaction kettle into a nickel-containing sulfuric acid reaction solution with a sulfuric acid concentration of 100 g/L for later use. A stirring device of the preimpregnation reaction kettle was started, and the formulated solution was warmed to 75 °C for later use.

The slurried solution formulated above was uniformly added into the preimpregnation reaction kettle to carry out a preimpregnation reaction. During the preimpregnation reaction, oxygen (purity of oxygen was 95%, the same below) was introduced at a rate of 7 m³/h, and the slurried solution was added while introducing the oxygen, with a ratio of a flow rate of the oxygen to a flow rate of the slurried solution being controlled at oxygen flow rate : slurried solution flow rate = (7 Nm³/h): (8 m³/h). After the addition of the slurried solution, time of the preimpregnation reaction was 1.5 times the time for adding the slurried solution completely into a preimpregnation reaction device.

Step c of oxidizing leaching reaction: reaction solution having completed the preimpregnation reaction in the preimpregnation reaction kettle was conveyed into a normal-pressure leaching reaction device. A stirring reactor was started, wherein a stirring rate of the stirring reactor was 100 r/min. An oxygen valve was opened. A super-energy oxidizer of an oxidizing leaching reaction kettle was started. The slurried solution flowed out from an upper part of the stirring reactor and then flowed into the super-energy oxidizer. The slurried solution and oxygen were mixed in the super-energy oxidizer, and then poured into the stirring reactor from a bottom of the stirring reactor. Through such reciprocating cycle, the oxygen was fully contacted with the material, and reaction was conducted for 3 h. Resultant underwent pressure filtration to render a first leaching solution 15.7 m³ and a first leaching residue 3.15 t. In the first leaching solution, pH was 5.0, a nickel concentration was 92 g/L, an iron concentration was 0.005 g/L, a copper concentration was 0.002 g/L, and a leaching rate of nickel was 52%; and main components of the first leaching residue were NiS, Fe(OH)₃, and Cu(OH)₂.

The first leaching residue was added into a slurrying kettle loaded with water 2 m³ and slurried for 1 h, to render a first leaching residue slurried solution, which was conveyed into a reaction device for pressurized oxidizing leaching loaded with a sulfuric acid reaction solution 12 m³ with a sulfuric acid concentration of 50 g/L. A gas pressure in the reaction kettle for pressurized oxidizing leaching was raised to 1.6 Mpa by using high-pressure oxygen. A steam valve of the reaction kettle for pressurized oxidizing leaching was opened. After a temperature in the reaction kettle for pressurized oxidizing leaching was raised to 100 °C, a pressurized oxidizing reaction started violently, the steam valve was closed, and the reaction temperature was maintained at 165 °C by heat released by the reaction itself. Oxygen was continuously introduced to maintain the gas pressure in the reaction kettle. The reaction ended 3 h later. Resultant underwent pressure filtration to render a second leaching solution and a second leaching residue. In the above, the second leaching solution 12 m³ contained 109 g/L nickel, the second leaching residue contained 4.07% of nickel, 52.03% of iron, and a dry weight of about 0.76 t, and an overall leaching rate of nickel was 98.9%.

Step d of impurity removal: the second leaching solution was conveyed into a reaction kettle for removing copper through replacement by iron powder; a stirring device of the reaction kettle for removing copper through replacement by iron powder was started, and an iron powder 50 kg was quantitatively added according to a copper content of the second leaching solution, to carry out a reaction for removing copper through replacement by iron powder for 1 h.

The sulfate solution having completed the reaction for removing copper through replacement by iron powder in the reaction kettle for removing copper through replacement by iron powder was conveyed to a filtering device for removing copper through replacement by iron powder, and filtered to render a sulfate solution, containing 0.01 g/L copper.

### Example 17 (copper-cobalt sulfide mineral)

Step a of slurrying reaction: copper-cobalt sulfide mineral 4.05 t containing 30% of copper, 20% of iron, 15% of cobalt, and 13% of sulfur was ground by a vertical roller mill into a powder with D90 reaching 30 µm. Into a slurrying kettle where a stirring device was started, water 8 m³ was added; and the powder was added into the slurrying kettle by means of pneumatic conveying at a positive pressure of 0.4 Mpa, to prepare a slurried solution with a liquid-solid ratio of 2:1 for later use.

Step b of preimpregnation reaction: a sulfate solution 8 m³ (containing 28 g/L cobalt and 16 g/L copper) produced by removing impurities, water 4 m³ and a concentrated sulfuric acid were prepared in a preimpregnation reaction kettle into a cobalt-copper-containing sulfuric acid reaction solution with a sulfuric acid concentration of 100 g/L for later use. A stirring device of the preimpregnation reaction kettle was started, and the formulated solution was warmed to 80 °C for later use.

The slurried solution formulated was uniformly added into the preimpregnation reaction kettle to carry out a preimpregnation reaction. During the preimpregnation reaction, oxygen was introduced at a rate of 10 m³/h, and the slurried solution was added while introducing the oxygen, with a ratio of a flow rate of the oxygen to a flow rate of the slurried solution being controlled at oxygen flow rate : slurried solution flow rate = (10 Nm³/h): (10 m³/h). Time of the preimpregnation reaction was 1.2 times the time for adding the slurried solution completely into a preimpregnation reaction device.

Step c of oxidizing leaching reaction: reaction solution having completed the preimpregnation reaction in the preimpregnation reaction kettle was conveyed into a normal-pressure leaching reaction device. A stirring reactor was started, wherein a stirring rate of the stirring reactor was 80 r/min. An oxygen valve was opened. A super-energy oxidizer of an oxidizing leaching reaction kettle was started. The slurried solution flowed out from an upper part of the stirring reactor and then flowed into the super-energy oxidizer. The slurried solution and oxygen were mixed in the super-energy oxidizer, and then poured into the stirring reactor from a bottom of the stirring reactor to react for 13 h. Resultant underwent pressure filtration to render a first leaching solution 18 m³ and a first leaching residue. In the first leaching solution, pH reached 2.0, a copper concentration was 46.01 g/L, a cobalt concentration was 26.2 g/L, an iron concentration was 3.05 g/L, a leaching rate of copper was 54%, and a leaching rate of cobalt was 65%.

The first leaching residue was added into a slurrying kettle loaded with water 8 m³ and slurried for 1 h, to render a first leaching residue slurried solution, which was conveyed into a reaction device for pressurized oxidizing leaching loaded with a sulfuric acid reaction solution 12 m³ with a sulfuric acid concentration of 90 g/L. A gas pressure in reaction kettle for pressurized oxidizing leaching was raised to 2 Mpa by using high-pressure oxygen. A steam valve of the reaction kettle for pressurized oxidizing leaching was opened. After a temperature in the reaction kettle for pressurized oxidizing leaching was raised to 80 °C, a pressurized oxidizing reaction started violently, the steam valve was closed, and the reaction temperature was maintained at 180 °C by heat released by the reaction itself. Oxygen was continuously introduced to maintain the gas pressure in the reaction kettle. The reaction ended 5 h later. Resultant underwent pressure filtration to render a second leaching solution and a second leaching residue. In the above, in the second leaching solution 17 m³, a copper concentration was 40.12 g/L and a cobalt concentration of 14.31 g/L, the second leaching residue contained 1% of copper, 0.5% of cobalt, 48.06% of iron, and a dry weight of about 2.5 t, an overall leaching rate of copper was 98.4%, and an overall leaching rate of cobalt was 98.3%.

### Example 18 (cobalt-copper alloy)

Step a of slurrying reaction: cobalt-copper alloy 2.0 t containing 5.5% of cobalt, 70% of copper, 18% of iron, and 2% of sulfur was ground by a vertical roller mill into a powder with D90 reaching 35 µm. Into a slurrying kettle where a stirring device was started, water 4 m³ was added; and the powder was added into the slurrying kettle by means of pneumatic conveying at a positive pressure of 0.6 Mpa, to prepare, with a liquid-solid ratio of 2:1, a slurried solution having a solid content greater than 30% for later use.

Step b of preimpregnation reaction: a sulfate solution 8 m³ (with a copper concentration of 17.5 g/L and 1.4 g/L cobalt) produced by removing impurities, water 8 m³ and a concentrated sulfuric acid were prepared in a preimpregnation reaction kettle into a cobalt-copper-containing sulfuric acid reaction solution with a sulfuric acid concentration of 180 g/L for later use. A stirring device of the preimpregnation reaction kettle was started, and the formulated solution was warmed to 65 °C for later use.

The slurried solution formulated was uniformly added into a preimpregnation reaction kettle to carry out a preimpregnation reaction. During the preimpregnation reaction, oxygen was introduced at a rate of 9 m³/h. The slurried solution was added while introducing the oxygen, with a ratio of a flow rate of the oxygen to a flow rate of the slurried solution being controlled at oxygen flow rate: slurried solution flow rate = (9 Nm³/h): (9 m³/h). Time of the preimpregnation reaction was 1.8 times the time for adding the slurried solution completely into a preimpregnation reaction device.

Step c of oxidizing leaching reaction: reaction solution having completed the preimpregnation reaction in the preimpregnation reaction kettle was conveyed into a normal-pressure leaching reaction device. A stirring reactor was started, wherein a stirring rate of the stirring reactor was 50 r/min. An oxygen valve was opened. A super-energy oxidizer of an oxidizing leaching reaction kettle was started. The slurried solution flowed out from an upper part of the stirring reactor and then flowed into the super-energy oxidizer. The slurried solution and oxygen were mixed in the super-energy oxidizer, and then poured into the stirring reactor from a bottom of the stirring reactor to react for 2.1 h. Resultant underwent pressure filtration to render a first leaching solution 15.7 m³ and a first leaching residue 1.1 t. In the first leaching solution, pH was 3.0, a copper concentration was 70.01 g/L, a cobalt concentration was 5.94 g/L, an iron concentration was 2.5 g/L, a leaching rate of copper was 90.9%, and a leaching rate of cobalt was 98.0%.

The first leaching residue was added into a slurrying kettle loaded with water 2 m³ and slurried for 1 h, to render a first leaching residue slurried solution, which was conveyed into a reaction device for pressurized oxidizing leaching loaded with a sulfuric acid reaction solution 8 m³ with a sulfuric acid concentration of 30 g/L. A gas pressure in reaction kettle for pressurized oxidizing leaching was raised to 1.0 Mpa by using high-pressure oxygen. A steam valve of the reaction kettle for pressurized oxidizing leaching was opened. After a temperature in the reaction kettle for pressurized oxidizing leaching was raised to 110 °C, a pressurized oxidizing reaction started violently, the steam valve was closed, and the reaction temperature was maintained at 140 °C by heat released by the reaction itself. Oxygen was continuously introduced to maintain the gas pressure in the reaction kettle. The reaction ended 2 h later. Resultant underwent pressure filtration to render a second leaching solution and a second leaching residue. In the above, in the second leaching solution 7.5 m³, a copper concentration was 17.6 g/L and a cobalt concentration was 0.22 g/L, the second leaching residue contained 1% of copper, a filter residue contained 0.1% of cobalt, 46% of iron, and a dry weight of about 0.78 t, an overall leaching rate of cobalt was 99.4%, and an overall leaching rate of copper was 99.5%.

### Example 19 (high nickel matte)

Step a of slurrying reaction: high nickel matte particles 4.05 t, produced by pyrometallurgy and containing 65% of nickel, 8% of copper, 3% of iron, and 18% of sulfur, were ground by a vertical roller mill into a powder with D90 reaching 20 µm. Into a slurrying kettle where a stirring device was started, water 8 m³ was added; and the powder was added into the slurrying kettle by means of pneumatic conveying at a positive pressure of 0.5 Mpa, to prepare, with a liquid-solid ratio of 2:1, a slurried solution having a solid content greater than 30% for later use.

Step b of preimpregnation reaction: a sulfate solution 8 m³ (with a nickel concentration of 109 g/L) produced by removing impurities, water 4 m³ and a concentrated sulfuric acid were prepared in a preimpregnation reaction kettle into a nickel-containing sulfuric acid reaction solution with a sulfuric acid concentration of 204 g/L for later use. A stirring device of the preimpregnation reaction kettle was started, and the formulated solution was warmed to 70 °C for later use.

The slurried solution formulated was uniformly added into the preimpregnation reaction kettle to carry out a preimpregnation reaction. During the preimpregnation reaction, oxygen was introduced at a rate of 8 m³/h. The slurried solution was added while introducing the oxygen, with a ratio of a flow rate of the oxygen to a flow rate of the slurried solution being controlled at oxygen flow rate: slurried solution flow rate = (8 Nm³/h): (9 m³/h). Time of the preimpregnation reaction was 1.2 times the time for adding the slurried solution completely into a preimpregnation reaction device.

Step c of oxidizing leaching reaction: reaction solution having completed the preimpregnation reaction in the preimpregnation reaction kettle was conveyed into a normal-pressure leaching reaction device. A stirring reactor was started, wherein a stirring rate of the stirring reactor was 120 r/min. An oxygen valve was opened. A super-energy oxidizer of an oxidizing leaching reaction kettle was started. The slurried solution flowed out from an upper part of the stirring reactor and then flowed into the super-energy oxidizer. The slurried solution and oxygen were mixed in the super-energy oxidizer, and then poured into the stirring reactor from a bottom of the stirring reactor. Through such reciprocating cycle, the oxygen was fully contacted with the material, and reaction was conducted for 3 h. Resultant underwent pressure filtration to render a first leaching solution 17.5 m³ and a first leaching residue 2.87 t. In the first leaching solution, pH was 5.0, a nickel concentration was 128 g/L, an iron concentration was 0.011 g/L, a copper concentration was 0.008 g/L, and a leaching rate of nickel was 64.13%.

The first leaching residue was added into a slurrying kettle loaded with water 2 m³ and slurried for 1 h, to render a first leaching residue slurried solution, which was conveyed into a reaction device for pressurized oxidizing leaching loaded with a sulfuric acid reaction solution 12 m³ with a sulfuric acid concentration of 100 g/L. A gas pressure in reaction kettle for pressurized oxidizing leaching was raised to 1.6 Mpa by using high-pressure oxygen. A steam valve of the reaction kettle for pressurized oxidizing leaching was opened. After a temperature in the reaction kettle for pressurized oxidizing leaching was raised to 110 °C, a pressurized oxidizing reaction started violently, the steam valve was closed, and the reaction temperature was maintained at 165 °C by heat released by the reaction itself. Oxygen was continuously introduced to maintain the gas pressure in the reaction kettle. The reaction ended 3 h later. Resultant underwent pressure filtration to render a second leaching solution and a second leaching residue. In the above, in the second leaching solution 11 m³, a nickel concentration was 109 g/L, the second leaching residue contained 4.07% of nickel, 52.03% of iron, and a dry weight of about 0.76 t, and an overall leaching rate of nickel was 99.1%.

Step d of impurity removal: the second leaching solution was conveyed into a reaction kettle for removing copper through replacement by iron powder; a stirring device of the reaction kettle for removing copper through replacement by iron powder was started, and an iron powder 550 kg was quantitatively added according to a copper content of the second leaching solution, to carry out a reaction for removing copper through replacement by iron powder for 1 h.

The sulfate solution having completed the reaction for removing copper through replacement by iron powder in the reaction kettle for removing copper through replacement by iron powder was conveyed to a filtering device for removing copper through replacement by iron powder, and filtered to render a sulfate solution, containing 0.03 g/L copper.

### Example 20 (low nickel matte)

Step a of slurrying reaction: low nickel matte particles 4.05 t, produced by pyrometallurgy and containing 30% of nickel, 2% of copper, 36% of iron, and 7% of sulfur, were ground by a vertical roller mill into a powder with D90 reaching 40 µm. Into a slurrying kettle where a stirring device was started, water 8 m³ was added; and the powder was added into the slurrying kettle by means of pneumatic conveying at a positive pressure of 0.6 Mpa, to prepare, with a liquid-solid ratio of 2:1, a slurried solution having a solid content greater than 30% for later use.

Step b of preimpregnation reaction: a sulfate solution 8 m³ (with a nickel concentration of 58.5 g/L) produced by removing impurities, water 4 m³ and a concentrated sulfuric acid were prepared in a preimpregnation reaction kettle into a nickel-containing sulfuric acid reaction solution with a sulfuric acid concentration of 100 g/L for later use. A stirring device of the preimpregnation reaction kettle was started, and the formulated solution was warmed to 75 °C for later use.

The slurried solution formulated was uniformly added into the preimpregnation reaction kettle to carry out a preimpregnation reaction. During the preimpregnation reaction, oxygen was introduced at a rate of 7 m³/h, and the slurried solution was added while introducing the oxygen, with a ratio of a flow rate of the oxygen to a flow rate of the slurried solution being controlled at oxygen flow rate : slurried solution flow rate = (7 Nm³/h): (8 m³/h). Time of the preimpregnation reaction was 1.3 times the time for adding the slurried solution completely into a preimpregnation reaction device.

Step c of oxidizing leaching reaction: reaction solution having completed the preimpregnation reaction in the preimpregnation reaction kettle was conveyed into a normal-pressure leaching reaction device. A stirring reactor was started, wherein a stirring rate of the stirring reactor was 110 r/min. An oxygen valve was opened. A super-energy oxidizer of an oxidizing leaching reaction kettle was started. The slurried solution flowed out from an upper part of the stirring reactor and then flowed into the super-energy oxidizer. The slurried solution and oxygen were mixed in the super-energy oxidizer, and then poured into the stirring reactor from a bottom of the stirring reactor to react for 4 h. Resultant underwent pressure filtration to render a first leaching solution 18 m³ and a first leaching residue 2.34 t. In the first leaching solution, pH was 5.0, a nickel concentration was 60 g/L, an iron concentration was 0.038 g/L, a copper concentration was 0.005 g/L, and a leaching rate of nickel was 61%.

The first leaching residue was added into a slurrying kettle loaded with water 2 m³ and slurried for 1 h, to render a first leaching residue slurried solution, which was conveyed into a reaction device for pressurized oxidizing leaching loaded with a sulfuric acid reaction solution 12 m³ with a sulfuric acid concentration of 50 g/L. A gas pressure in reaction kettle for pressurized oxidizing leaching was raised to 1.4 Mpa by using high-pressure oxygen. A steam valve of the reaction kettle for pressurized oxidizing leaching was opened. After a temperature in the reaction kettle for pressurized oxidizing leaching was raised to 90 °C, a pressurized oxidizing reaction started violently, the steam valve was closed, and the reaction temperature was maintained at 155 °C by heat released by the reaction itself. Oxygen was continuously introduced to maintain the gas pressure in the reaction kettle. The reaction ended 3.5 h later. Resultant underwent pressure filtration to render a second leaching solution and a second leaching residue. In the above, in the second leaching solution 12 m³, a nickel concentration was 57 g/L, the second leaching residue contained 1.2% of nickel, 50.08% of iron, and a dry weight of about 2.88 t, and an overall leaching rate of nickel was 97.9%.

Step d of impurity removal: the second leaching solution was conveyed into a reaction kettle for removing copper through replacement by iron powder; a stirring device of the reaction kettle for removing copper through replacement by iron powder was started, and an iron powder 200 kg was quantitatively added according to a copper content of the second leaching solution, to carry out a reaction for removing copper through replacement by iron powder for 1 h.

The sulfate solution having completed the reaction for removing copper through replacement by iron powder in the reaction kettle for removing copper through replacement by iron powder was conveyed to a filtering device for removing copper through replacement by iron powder, and filtered to render a sulfate solution, containing 0.01 g/L copper.

The effects of the present invention are proved below in conjunction with relevant comparative examples. For the sake of unification of comparison standards, all the following comparative examples are compared with Example 19.

### Comparative Example 11 (order of adding sulfuric acid)

High nickel matte raw material was taken as an example to carry out a comparative experiment. The present comparative example was different from Example 19 in that: in a pretreatment step, the slurried solution was added first, and then the sulfuric acid was slowly added (in Example 19, acid was added first, and then the slurried solution was added). The normal-pressure oxidizing leaching rendered a first leaching solution 14.5 m³, in which pH was 1.5, a nickel concentration was 96.01 g/L, an iron concentration was 3.36 g/L, a copper concentration was 14.04 g/L, and an overall leaching rate of nickel was 39.8%.

Through comparison with Example 19, it can be seen that, by adding the slurried solution into water first and then adding the concentrated sulfuric acid, after the order of feeding the sulfuric acid and the slurried solution is changed, a total concentration of sulfuric acid of reaction system is substantially low, the concentration of sulfuric acid of the system throughout the reaction is low, and oxidizing property is low, which is unfavorable to oxidation of sulfide in the high nickel matte, thus leading to great reduction of the leaching rate of nickel from 64.13% to 39.8%.

### Comparative Example 12 (grinding particle size not meeting requirement)

High nickel matte raw material was taken as an example to carry out a comparative experiment. The present comparative example was different from Example 19 in that: the material was ground into fine particles with D90 of 130 µm and slurried. It was detected that in a first leaching solution 13.5 m³ produced by normal-pressure leaching, pH reached 1.05, a nickel concentration was 89.6 g/L, an iron concentration was 4.56 g/L, a copper concentration was 12.89 g/L, and an overall leaching rate of nickel was 34.5%.

Through comparison with Example 19, it can be seen that the finer the particle size, the larger the specific surface area, the larger the contact area of reaction, the faster the reaction rate, and meanwhile the finer the particle size, the more beneficial to the leaching of nickel in a metallic state wrapped by sulfide, that is, the smaller particle size of the high nickel matte particles facilitates the oxidizing leaching of nickel.

### Comparative Example 13 (oxidant)

In order to study influences of different oxidants on the leaching rate of nickel, air was used as an oxidant in Comparative Example 13 to conduct the reaction process of normal-pressure oxidizing leaching.

Difference lied in that: air instead of oxygen was used as an oxidant for reaction in the normal-pressure and pressurized procedures. It was detected that in a first leaching solution 15 m³ produced by normal-pressure leaching, pH reached 0.89, a nickel concentration was 96.7 g/L, an iron concentration was 6.75 g/L, a copper concentration of 8.44 g/L, and an overall leaching rate of nickel was 41.33%.

Through comparison with Example 19, it can be seen that using high-purity oxygen as an oxidant is more efficient than using air as an oxidant for the reason that air contains not only oxygen and other oxidants, but also contains other reducing gases and protective inert nitrogen, which is not conducive to oxidation of sulfide, and meanwhile when air is used as an oxidant, a large introduction amount is demanded, which is not conducive to air dispersion or dissolution, while using pure oxygen as an oxidant not only gives a strong oxidizing property, but also can reduce a volume of air introduced, thereby facilitating the dispersion of oxygen and dissolution in the reaction system, and further accelerating the oxidizing leaching rate of sulfide in the high nickel matte.

### Comparative Example 14 (dispersion mode of oxygen)

In order to study influences of different dispersion modes of oxygen on the leaching rate of nickel, oxygen was directly introduced into the reaction kettle for normal-pressure oxidizing leaching in Comparative Example 14 to carry out the normal-pressure oxidizing leaching.

Difference lied in that the ultrasonic oxidizer was removed from the normal-pressure leaching procedure, and oxygen was directly introduced into the reaction kettle for normal-pressure oxidizing leaching to carry out the normal-pressure oxidizing leaching reaction. It was detected that in a first leaching solution 15 m³ produced by the normal-pressure leaching procedure, pH reached 4.5, a nickel concentration was 104.3 g/L, an iron concentration was 0.045 g/L, a copper concentration was 0.15 g/L, and an overall leaching rate of nickel was 44.6%.

Through comparison with Example 19, it can be seen that the oxidizing leaching rate with the ultrasonic oxidizer is about 20% higher than that with the conventional oxygen introduction for the reason that by using high-frequency vibration of ultrasonic waves, the ultrasonic oxidizer facilitates dispersion and dissolution of oxygen bubbles, can greatly increase an oxygen dissolution rate and a gas dissolution rate of solution system, and is conducive to improving the reaction rate of the oxidizing leaching reaction.

### Comparative Example 15 (amount of sulfuric acid added)

The purpose is to study influences of different amounts of sulfuric acid added on purification reaction of copper and iron in reaction processes with different amounts of sulfuric acid added.

Difference lied in that the amount of sulfuric acid added was adjusted to 2.8 t in the pretreatment procedure of Comparative Example 15. It was detected that in a first leaching solution 14.5 m³ produced by a normal-pressure leaching procedure, pH reached 1.02, a nickel concentration was 130.4 g/L, an iron concentration was 3.45 g/L, a copper concentration was 9.12 g/L, and an overall leaching rate of nickel was 65.1%.

Through comparison with Example 19, it can be seen that when the amount of sulfuric acid added is greater than a theoretical calculation amount, endpoint pH of reaction is too low, solution contains a large amount of leached iron and copper, which causes increased impurities in the solution after leaching, for the reason that the sulfuric acid can only be consumed by nickel in a metallic state, while oxidizing leaching of nickel sulfide does not consume sulfuric acid, and then when the amount of sulfuric acid added is excessive, excessive sulfuric acid will consume acid-consuming impurities such as copper and iron, so that impurities in the leaching solution are increased, and the purpose of selective leaching cannot be achieved.

### Comparative Example 16 (adding dilute sulfuric acid)

The purpose is to study influences of different concentrations of sulfuric acid on leaching rate of nickel with the same total amount of sulfuric acid added.

Difference lied in that the concentration of the nickel-containing sulfuric acid solution in Comparative Example 16 was 120 g/L. It was detected that in a first leaching solution 17.5 m³ produced by a normal-pressure leaching procedure, pH reached 4.5, a nickel concentration was 101 g/L, an iron concentration was 0.03 g/L, a copper concentration was 0.05 g/L, and an overall leaching rate of nickel was 50.6%.

Through comparison with Example 19, it can be seen that a too low concentration of the sulfuric acid solution will affect the leaching rate of nickel.

### Comparative Example 17 (combination of leaching time)

The purpose is to study influences of leaching time on the leaching rate under the same condition.

Difference lied in that: preimpregnation time in Comparative Example 17 was 0.5 h. It was detected that in a first leaching solution 17.5 m³ produced by the normal-pressure leaching procedure, pH reached 5.0, a nickel concentration was 115 g/L, an iron concentration was 0.02 g/L, a copper concentration was 0.005 g/L, and an overall leaching rate of nickel was 57.6%.

Through comparison with Example 19, it can be seen that it affects the oxidizing reaction rate of raw material, reduces the leaching rate of nickel, and finally causes decrease of the overall leaching rate of nickel.

The pH values, nickel concentrations, iron concentrations, copper concentrations and leaching rates of nickel of filtrates of the first leaching solutions in Example 19 and Comparative Examples 11-17 are recorded in Table 6.

**Table 6 Statistical Table of Relevant Parameters of First Leaching Solutions in Example 19 and Comparative Examples 1-7**

| | pH | Nickel Concentration (g/L) | Iron Concentration (g/L) | Copper Concentration (g/L) | Leaching Rate of Nickel (%) |
|---|---|---|---|---|---|
| Example 19 | 5.0 | 128 | 0.011 | 0.008 | 64.13 |
| Comparative Example 11 | 1.5 | 96.01 | 3.36 | 14.04 | 39.8 |
| Comparative Example 12 | 1.05 | 89.6 | 4.56 | 12.89 | 34.5 |
| Comparative Example 13 | 0.89 | 96.7 | 6.75 | 8.44 | 41.33 |
| Comparative Example 14 | 4.5 | 104.3 | 0.045 | 0.15 | 44.6 |
| Comparative Example 15 | 1.02 | 130.4 | 3.45 | 9.12 | 65.1 |
| Comparative Example 16 | 4.5 | 101 | 0.03 | 0.05 | 50.6 |
| Comparative Example 17 | 5.0 | 115 | 0.02 | 0.005 | 57.6 |

### Example 21 (copper-cobalt sulfide mineral)

Sulfide mineral was copper-cobalt sulfide mineral containing 13.7% of copper, 6% of cobalt, 15.2% of iron, and 12.6% of sulfur.
1) Slurrying: sulfide mineral 4.05 t was ground by a high-energy ball mill into a powder with D90 of 30 µm. Into a slurrying kettle where a stirring device was started, water 10 m³ was added; and the powder was conveyed into the slurrying kettle by means of pneumatic conveying at a positive pressure of 0.8 Mpa, to prepare a slurried solution, wherein a liquid-solid mass ratio of the slurried solution was 2.5:1.
2) Preactivation: a sulfuric acid solution 13 m³ with a sulfuric acid content of 100 g/L was formulated by concentrated sulfuric acid and water in a preimpregnation reaction kettle for later use. A stirring device of the preimpregnation reaction kettle was started, and the formulated solution was warmed to 60 °C for later use.

The slurried solution formulated was added into a preactivation reaction kettle containing 150 g/L sulfuric acid solution at a feeding rate of 1 t/h, and after the addition of the slurried solution, preactivation was carried out for 1 h, wherein a reaction temperature was maintained at 60 °C and a linear stirring rate was maintained at 5 m/s. During the preactivation reaction, by dispersing oxygen into microbubbles by a microbubble reactor, a small amount of oxygen (with purity greater than 90%, the same below) was injected and introduced 5 meters below a liquid level of the preactivation reaction device, wherein an introduction rate was 1 Nm³/h. In the above, a feeding amount of the slurried solution was 1 t.

3) Normal-pressure leaching: the preactivated slurried solution was conveyed into a normal-pressure reaction kettle, and a normal-pressure leaching reaction was carried out for 4 h, wherein a reaction temperature was maintained at 60 °C, stirring was performed at a stirring rate of 50 r/min, and oxygen (with purity greater than 90%) was introduced at a rate of 10 Nm³/h. In the above, a gas-liquid mixing pump communicated with a bottom of reaction kettle, an oxygen source was connected, and the slurried solution flowing out from an upper part of a normal-pressure leaching device was mixed with oxygen pumped by the gas-liquid mixing pump, and then mixture was pumped back into the kettle from a lower part of the normal-pressure leaching device. Through such reciprocating cycle, the oxygen was fully contacted with material.

4) Solid-liquid separation: after the normal-pressure leaching reaction was completed, the slurried solution was conveyed into a filtering device for a liquid having undergone the normal-pressure leaching, and subjected to solid-liquid separation to render a normal-pressure leaching solution 20 m³ and a normal-pressure leaching residue. In the above, the normal-pressure leaching solution was a cobalt-copper sulfate solution, pH value was 4.8, a copper concentration was 17.99 g/L, an iron concentration was 0.012 g/L, a cobalt concentration was 7.90 g/L, a normal-pressure leaching rate of copper was 65.0%, and a normal-pressure leaching rate of cobalt was 65.2%.

5) Pressurized leaching: the normal-pressure leaching residue was added with water 2 m³ and slurried for 1 h, and then conveyed into a pressurized leaching reaction kettle loaded with a sulfuric acid reaction solution 16 m³ with a sulfuric acid concentration of 30 g/L; a gas pressure in the pressurized leaching reaction kettle was raised to and maintained at 1.4 Mpa by using high-pressure oxygen, an initial temperature of the pressurized leaching reaction was raised to 120 °C, and time of pressurized leaching was 5 h. The pressurized leaching reaction started violently, and a reaction temperature was maintained by heat released by the reaction itself, until the pressurized oxidizing reaction ended. After the reaction ended, resultant was filtered to render a pressured leaching solution and a pressurized leaching residue. In the above, in the pressurized leaching solution 15 m³, a copper concentration was 12.23 g/L, a pressurized cobalt concentration was 5.36 g/L, a pressurized leaching rate of copper was 33.2%, and a leaching rate of cobalt was 33.1%. An overall leaching rate of copper in normal-pressure and pressurized stage was 98.2%, and an overall leaching rate of cobalt in normal-pressure and pressurized stage was 98.3%.

### Example 22 (high nickel matte)

Sulfide mineral was high nickel matte containing 71% of nickel, 1% of iron, and 20% of sulfur.
1) Slurrying: sulfide mineral 4.05 t was ground by a high-energy ball mill into a powder with D90 of 40 µm. Into a slurrying kettle where a stirring device was started, water 8 m³ was added; and the powder was conveyed into the slurrying kettle by means of pneumatic conveying at a positive pressure of 0.4 Mpa, to prepare a slurried solution, wherein a particle size D90 of the ground sulfide mineral powder was 40 µm, and a liquid-solid mass ratio in the slurried solution was 2: 1.
2) Preactivation: a sulfuric acid solution 18 m³ with a sulfuric acid content of 300 g/L was formulated by concentrated sulfuric acid and water in a preimpregnation reaction kettle for later use. A stirring device of the preimpregnation reaction kettle was started, and the formulated solution was warmed to 90 °C for later use.

The slurried solution formulated was added into a preactivation reaction kettle containing 300 g/L sulfuric acid solution at a feeding rate of 10 t/h, and after the addition of the slurried solution, preactivation was carried out for 1.5 h, wherein a reaction temperature was maintained at 90 °C and a linear stirring rate was maintained at 6 m/s. During the preactivation reaction, by dispersing oxygen into microbubbles by a microbubble reactor, a small amount of oxygen (with purity greater than 90%, the same below) was injected and introduced 5 meters below a liquid level of the preactivation reaction device, wherein an introduction rate was 10 Nm³/h. In the above, a feeding amount of the slurried solution was 10 t.

3) Normal-pressure leaching: the preactivated slurried solution was conveyed into a normal-pressure reaction kettle, and a normal-pressure leaching reaction was carried out for 13 h, wherein a reaction temperature was maintained at 90 °C, stirring was performed at a stirring rate of 120 r/min, and oxygen (with purity greater than 90%) was introduced at a rate of 10 Nm³/h. In the above, a gas-liquid mixing pump communicated with a bottom of reaction kettle, an oxygen source was connected, and the slurried solution flowing out from an upper part of the normal-pressure leaching device was mixed with oxygen pumped by the gas-liquid mixing pump, and then mixture was pumped back into the kettle from a lower part of the normal-pressure leaching device. Through such reciprocating cycle, the oxygen was fully contacted with material.

4) Solid-liquid separation: after the normal-pressure leaching reaction was completed, the slurried solution was conveyed into a filtering device for a liquid having undergone the normal-pressure leaching, and subjected to solid-liquid separation to render a normal-pressure leaching solution 20 m³ and a normal-pressure leaching residue. In the above, main components of the normal-pressure leaching residue were NiS, Fe(OH)₃, Cu(OH)₂, etc.; a normal-pressure leaching solution was a NiSO₄ solution, a pH value was 5.1, a nickel concentration was 88.27 g/L, an iron concentration was 0.008 g/L, and a normal-pressure leaching rate of nickel was 61.5%.

5) Pressurized leaching: the normal-pressure leaching residue was added with water 2 m³ and slurried for 1 h, and then conveyed into a pressurized leaching reaction kettle loaded with a sulfuric acid reaction solution 16 m³ with a sulfuric acid concentration of 150 g/L; a gas pressure in the pressurized leaching reaction kettle was raised to and maintained at 1.8 Mpa by using high-pressure oxygen, an initial temperature of the pressurized leaching reaction was raised to 135 °C, and time of pressurized leaching was 2.5 h. The pressurized leaching reaction started violently, and a reaction temperature was maintained by heat released by the reaction itself, until the pressurized oxidizing reaction ended. After the reaction ended, resultant was filtered to render a pressured leaching solution and a pressurized leaching residue. In the above, in the pressurized leaching solution 15 m³, a nickel concentration was 73.87 g/L, a pressurized leaching rate of nickel was 37.1 g/L, and an overall normal-pressure and pressurized leaching rate of nickel was 98.6%.

6) Impurity removal: the pressurized leaching solution was conveyed into a reaction kettle for removing impurities and started to be stirred. A pH value of reaction was maintained at 1 and a reaction temperature was maintained at 55 °C. An LIX extractant was added, and copper-removing purification was carried out by a 4-section centrifugal extraction method. Resultant was filtered to render an impurity-removed leaching solution. In the above, organic formulation in the 4-section centrifugal extraction method was: LIX extractant: 30%; solvent oil: 70%. A copper concentration in the impurity-removed leaching solution was 0.01 g/L.

### Example 23 (cobalt-copper alloy)

Sulfide mineral: copper-cobalt alloy containing 65% of copper, 2.5% of cobalt, 24.66% of iron, and 3% of sulfur.

Extraction equipment: the same as that in Example 21.

Extraction steps: the same as those in Example 21.

Design parameters: a concentration of the sulfuric acid solution in the normal-pressure leaching was 482 g/L, time of the normal-pressure leaching was 2 h, and other parameters were the same as those in Example 21.

Detection results: it was detected that in a normal-pressure leaching solution 20 m³, a pH value was 4.9, 118.82 g/L copper and 4.35 g/L cobalt were contained, a normal-pressure leaching rate of copper was 90.3%, and a normal-pressure leaching rate of cobalt was 90.2%.

It was detected that in a pressurized leaching solution 15 m³, 15.44 g/L copper and 0.57 g/L cobalt were contained, a pressurized leaching rate of copper was 8.8%, and a pressurized leaching rate of cobalt was 8.4%. An overall normal-pressure and pressurized leaching rate of copper was 99.1%, and an overall leaching rate of cobalt was 98.6%.

### Example 24 (nickel sulfide mineral)

Sulfide mineral: nickel sulfide mineral containing 53% of nickel, 0.5% of copper, 4% of iron, and 28% of sulfur.

Extraction equipment: the same as that in Example 22.

Extraction steps: the same as those in Example 22.

Design parameters: a concentration of the sulfuric acid solution in the normal-pressure leaching was 277 g/L, time of the normal-pressure leaching was 13 h, and other parameters were the same as those in Example 22.

Detection results: it was detected that in a normal-pressure leaching solution 20 m³, a pH value was 5.0, 76.49 g/L nickel was contained, an iron concentration was 0.006 g/L, and a normal-pressure leaching rate of nickel was 71.2%.

It was detected that in a pressurized leaching solution 15 m³, 41.2 g/L nickel was contained, and a pressurized leaching rate of nickel was 27.1%. An overall normal-pressure and pressurized leaching rate of nickel was 98.3%.

A copper concentration detected in the impurity-removed leaching solution was detected to be 0.01g/L.

### Example 25 (low nickel matte)

Sulfide mineral: low nickel matte containing 31.08% of nickel, 35% of iron, and 27% of sulfur.

Extraction equipment: the same as that in Example 22.

Extraction steps: the same as those in Example 22.

Design parameters: a concentration of the sulfuric acid solution in the normal-pressure leaching was 220 g/L, time of the normal-pressure leaching was 2 h, and other parameters were the same as those in Example 22.

Detection results: it was detected that in a normal-pressure leaching solution 20 m³, a pH value was 5.0, 39.51 g/L nickel was contained, an iron concentration was 0.011 g/L, and a normal-pressure leaching rate of nickel was 62.7%.

It was detected that in a pressurized leaching solution 15 m³, 31.28 g/L nickel was contained, and a pressurized leaching rate of nickel was 35.1%. An overall normal-pressure and pressurized leaching rate of nickel was 97.8%.

A copper concentration detected in the impurity-removed leaching solution was detected to be 0.01g/L.

### Comparative Example 18 (sulfuric acid solution with relatively low concentration)

Sulfide mineral: high nickel matte containing 71% of nickel, 1% of iron, and 20% of sulfur.

Extraction equipment: the same as that in Example 22.

Extraction steps: a step of preactivation was carried out using a sulfuric acid solution (with a content of sulfuric acid of 50 g/L) with a relatively low concentration, and correspondingly, in a normal-pressure leaching step, an equal amount of sulfuric acid solution was used for normal-pressure leaching, and other steps are the same as those in Example 22. Notes: subject to the capacity of reaction equipment, a feeding amount of material was reduced to 675 Kg, and an amount of the sulfuric acid solution used was still 18 m³.

Design parameters: the same as those in Example 22.

Detection results: it was detected that in a normal-pressure leaching solution 22 m³, a pH value was 5.1, 64.08 g/L nickel was contained, an iron concentration was 0.005 g/L, and a normal-pressure leaching rate of nickel was 49.1%, reduced by 12.4% compared with Example 22.

### Comparative Example 19 (coarse grinding particle size of material)

Sulfide mineral: high nickel matte containing 71% of nickel, 1% of iron, and 20% of sulfur.

Extraction equipment: the same as that in Example 22.

Extraction steps: the same as those in Example 22.

Design parameters: a particle size of the high nickel matte after grinding satisfied that the particle size D90 was 80 µm, and other design parameters are the same as those in Example 22.

Detection results: it was detected that in a normal-pressure leaching solution 20 m³, a pH value was 4.9, 67.52 g/L nickel was contained, an iron concentration was 0.004 g/L, and a normal-pressure leaching rate of nickel was 47.0%, reduced by 14.5% compared with Example 22.

### Comparative Example 20 (without gas-liquid mixing pump)

Sulfide mineral: high nickel matte containing 71% of nickel, 1% of iron, and 20% of sulfur.

Extraction device: the normal-pressure leaching device was not provided with a gas-liquid mixing pump, but was a conventional mechanical stirring leaching device.

Extraction steps: the same as those in Example 22.

Design parameters: the same as those in Example 22.

Detection results: it was detected that in a normal-pressure leaching solution 20 m³, a pH value was 5.0, 62.05 g/L nickel was contained, an iron concentration was 0.012 g/L, and a normal-pressure leaching rate of nickel was 43.2%, reduced by 18.3% compared with Example 22.

**Table 7 Leaching Rates of Target Metals in Various Examples and Comparative Examples**

| | Sulfide Mineral Raw Material | Leached Metal | Normal-pressure Leaching Rate | Pressurized Leaching Rate | Total Leaching Rate |
|---|---|---|---|---|---|
| Example 21 | Copper-cobalt sulfide mineral | Copper | 65.0% | 33.2% | 98.2% |
| | | Cobalt | 65.2% | 33.1% | 98.3% |
| Example 22 | High nickel matte | Nickel | 61.5% | 37.1% | 98.6% |
| Example 23 | Copper-cobalt alloy | Copper | 90.3% | 8.8% | 99.1% |
| | | Cobalt | 90.2% | 8.4% | 98.6% |
| Example 24 | Nickel sulfide mineral | Nickel | 71.2% | 27.1% | 98.3% |
| Example 25 | Low nickel matte | Nickel | 62.7% | 35.1% | 97.8% |
| Comparative Example 18 | High nickel matte | Nickel | 49.1% | | |
| Comparative Example 19 | High nickel matte | Nickel | 47.0% | | |
| Comparative Example 20 | High nickel matte | Nickel | 43.2% | | |

As illustrated in conjunction with Table 7, it can be seen from Example 22 and Comparative Examples 18-20 that in the method of the present invention, by carrying out the preactivation using the high-concentration sulfuric acid solution, grinding the particle size D90 of the sulfide mineral to be smaller than 40 µm and fully dispersing oxygen using the gas-liquid mixing pump in the normal-pressure leaching stage, the leaching rate of target leaching in the normal-pressure leaching stage can be effectively improved, and in a case where the pressurized leaching equipment is simplified, the overall leaching rate of a target metal in the sulfide mineral still can be ensured. Thus, the energy consumption and costs in the extraction process and the potential safety hazards in the production process are reduced. Optionally, it can be seen from Examples 21-25 that the method of the present invention is suitable for extracting a target metal in a variety of sulfide minerals, the leaching rate in the normal-pressure leaching stage can reach 61% or above, and the overall leaching rate can reach 97.8% or above.

### Example 26

Sulfide mineral was copper-cobalt sulfide mineral containing 13.7% of copper, 6% of cobalt, 15.2% of iron, and 12.6% of sulfur.
1) Sulfide mineral particles 4.05 t were first subjected to first-stage grinding by a ball mill, and a particle size D90 of material after the first-stage grinding was 80 µm; then the material was subjected to second-stage grinding by a tube mill, and a particle size D90 of the material obtained after second grinding was 40 µm. In second-stage milling node, concentrated sulfuric acid of 1.0% of a weight of the copper-cobalt sulfide mineral was added by means of pipeline conveying and injecting. In the above, a concentration of the concentrated sulfuric acid was 1800 g/L, and a rate of adding the concentrated sulfuric acid was 0.2 t/h.
2) The material having been ground twice was conveyed into a reaction kettle containing a sulfuric acid solution 6.5 m³ with a concentration of 100 g/L, and a normal-pressure leaching reaction was carried out for 4 h, wherein a reaction temperature was maintained at 60 °C, stirring was performed at a stirring rate of 50 r/min, and oxygen (with purity greater than 90%) was introduced at a rate of 10 Nm³/h, to render a normal-pressure leaching slurry.

In the above, a device for introducing the oxygen was an ultrasonic super-energy oxidizer, and the ultrasonic super-energy oxidizer was connected to an oxygen source and communicated with a bottom of the normal-pressure leaching device.

The oxygen was introduced in such a way that the ultrasonic super-energy oxidizer mixed the introduced oxygen and a slurry, which was obtained by mixing the material having been ground twice and flowing out from an upper part of the normal-pressure leaching device and the sulfuric acid solution, and pumped the same into the normal-pressure leaching device from the bottom of the normal-pressure leaching device, so that oxygen was fully contacted with the material.

3) After the normal-pressure leaching reaction was completed, the normal-pressure leaching slurry was conveyed into a filtering device for the normal-pressure leaching slurry, and subjected to solid-liquid separation to render a normal-pressure leaching solution 5 m³ and a normal-pressure leaching residue. In the above, the normal-pressure leaching solution was a copper-cobalt sulfate solution, pH was 5.0, a copper concentration was 17.95 g/L, an iron concentration was 0.012 g/L, a cobalt concentration was 8.10 g/L, a normal-pressure leaching rate of copper was 62.3%, and a normal-pressure leaching rate of cobalt was 64.2%.

4) The normal-pressure leaching residue was slurried with a sulfuric acid solution 6.5 m³ with a concentration of 50 g/L, and then conveyed into a pressurized leaching reaction kettle; a gas pressure in pressurized oxidizing leaching reaction kettle was raised to and maintained at 1.4 Mpa by using high-pressure oxygen (with purity greater than 90%), an initial temperature of pressurized leaching reaction was raised to 120 °C, the pressurized leaching reaction started violently, and a reaction temperature was maintained by heat released by the reaction itself, until the pressurized oxidizing reaction ended. After the reaction was conducted for 5 h, resultant was filtered to render a pressured leaching solution and a pressurized leaching residue. In the above, in the pressurized leaching solution 15 m³, a copper concentration was 10.61 g/L, a cobalt concentration was 4.29 g/L, a pressurized leaching rate of copper was 36.9%, and a pressurized leaching rate of cobalt was 34.1%. An overall normal-pressure and pressurized leaching rate of copper was 99.2%, and an overall normal-pressure and pressurized leaching rate of cobalt was 98.3%.

### Example 27

Sulfide mineral was high nickel matte containing 71% of nickel, 1% of iron, and 20% of sulfur.
1) Sulfide mineral particles 4.05 t were first subjected to first-stage grinding by a Raymond mill, and a particle size D90 of material after the first-stage grinding was 70 µm; then the material was subjected to second-stage grinding by a vibration mill, and a particle size D90 of the material obtained after the second grinding was 30 µm. In second-stage milling node, concentrated sulfuric acid of 5% of a weight of the high nickel matte was added by means of pipeline conveying and injecting. In the above, a concentration of the concentrated sulfuric acid was 1800 g/L, and a rate of adding the concentrated sulfuric acid was 0.3 t/h.
2) The material having been ground twice was conveyed into a reaction kettle containing a sulfuric acid solution 24 m³ with a concentration of 120 g/L, and a normal-pressure leaching reaction was carried out for 4 h, wherein a reaction temperature was maintained at 85 °C, stirring was performed at a stirring rate of 120 r/min, and oxygen (with purity greater than 90%) was introduced at a rate of 60 Nm³/h, to render a normal-pressure leaching slurry.

In the above, a device for introducing the oxygen was an ultrasonic super-energy oxidizer, and the ultrasonic super-energy oxidizer was connected to an oxygen source and communicated with a bottom of the normal-pressure leaching device.

The oxygen was introduced in such a way that the ultrasonic super-energy oxidizer mixed the introduced oxygen and a slurry, which was obtained by mixing the material having been ground twice and flowing out from an upper part of the normal-pressure leaching device and the sulfuric acid solution, and pumped the same into the normal-pressure leaching device from the bottom of the normal-pressure leaching device, so that oxygen was fully contacted with the material.

3) After the normal-pressure leaching reaction was completed, the normal-pressure leaching slurry was conveyed into a filtering device for the normal-pressure leaching slurry, and subjected to solid-liquid separation to render a normal-pressure leaching solution 20 m³ and a normal-pressure leaching residue. In the above, the normal-pressure leaching solution was a nickel sulfate solution, pH was 5.1, a nickel concentration was 91.81 g/L, an iron concentration was 0.011 g/L, and a normal-pressure leaching rate of nickel was 64.0%.

4) The normal-pressure leaching residue was slurried with a sulfuric acid solution 18 m³ with a concentration of 80 g/L, and then conveyed into a pressurized leaching reaction kettle; a gas pressure in pressurized oxidizing leaching reaction kettle was raised to and maintained at 1.8 Mpa by using high-pressure oxygen (with purity greater than 90%), an initial temperature of pressurized leaching reaction was raised to 140 °C, the pressurized leaching reaction started violently, and a reaction temperature was maintained by heat released by the reaction itself, until the pressurized oxidizing reaction ended. After the pressurized leaching was conducted for 2 h, resultant was filtered to render a pressured leaching solution and a pressurized leaching residue. After the reaction ended, resultant was filtered to render a pressurized leaching solution and a pressurized leaching residue. In the above, in the pressurized leaching solution 15 m³, a nickel concentration was 68.99 g/L, an iron concentration was 0.007 g/L, and a normal-pressure leaching rate of nickel was 35.4%. An overall normal-pressure and pressurized leaching rate of nickel was 99.4%.

5) The pressurized leaching solution was conveyed into a reaction kettle for removing impurities. The pH of the reaction was maintained at 1.2 and reaction temperature was maintained at 50 °C. An LIX extractant was added, and copper-removing purification was carried out by a 4-section centrifugal extraction method. Resultant was filtered and subjected to solid-liquid separation to render an impurity-removed leaching solution. In the above, organic formulation proportions in the 4-section centrifugal extraction method were: LIX extractant: 30%; solvent oil: 70%. A copper concentration in the impurity-removed leaching solution was 0.01 g/L.

### Example 28

Sulfide mineral: copper-cobalt alloy containing 65% of copper, 2.5% of cobalt, 24.66% of iron, and 3% of sulfur.

Extraction equipment: the same as that in Example 26.

Extraction steps: the same as those in Example 26.

Design parameters: the concentrated sulfuric acid was added in an amount of 5% of a weight of the copper-cobalt alloy, the sulfuric acid solution in the normal-pressure leaching had a concentration of 170 g/L and added in an amount of 25 m³, time of the normal-pressure leaching was 2 h, and other design parameters were the same as those in Example 26.

Detection results: a normal-pressure leaching solution 20 m³ contained 118.56 g/L copper and 4.54 g/L cobalt, a normal-pressure leaching rate of copper was 90.1%, and a normal-pressure leaching rate of cobalt was 89.8%.

It was detected that a pressurized leaching solution 20 m³ contained 12.2 g/L copper and 0.47 g/L cobalt, a pressurized leaching rate of copper was 9.3%, and a pressurized leaching rate of cobalt was 9.3%. An overall normal-pressure and pressurized leaching rate of copper was 99.4%, and an overall leaching rate of cobalt was 99.1%.

### Example 29

Sulfide mineral: nickel sulfide mineral containing 53% of nickel, 0.5% of copper, 4% of iron, and 28% of sulfur.

Extraction equipment: the same as that in Example 27.

Extraction steps: the same as those in Example 27.

Design parameters: the concentrated sulfuric acid was added in an amount of 5% of a weight of the nickel sulfide mineral, the sulfuric acid solution in the normal-pressure leaching had a concentration of 100 g/L and was added in an amount of 21 m³, time of the normal-pressure leaching was 13 h, and other design parameters were the same as those in Example 27.

Detection results: a normal-pressure leaching solution 15 m³ contained 87.59 g/L nickel, a normal-pressure leaching rate of nickel was 61.2%, and an iron concentration was 0.008 g/L.

A pressurized leaching solution 15 m³ contained 55.53 g/L nickel, and a pressurized leaching rate of nickel was 37.0%. An overall normal-pressure and pressurized leaching rate of nickel was 98.2%.

A copper concentration in the impurity-removed leaching solution was detected to be 0.01 g/L.

### Example 30

Sulfide mineral: low nickel matte containing 31.08% of nickel, 35% of iron, and 27% of sulfur.

Extraction equipment: the same as that in Example 27.

Extraction steps: the same as those in Example 27.

Design parameters: the concentrated sulfuric acid was added in an amount of 5% of a weight of the low nickel matte, the sulfuric acid solution in the normal-pressure leaching had a concentration of 102 g/L and was added in an amount of 19 m³, time of the normal-pressure leaching was 2 h, and other design parameters were the same as those in Example 27.

Detection results: a normal-pressure leaching solution 15 m³ contained 52.31 g/L nickel, a normal-pressure leaching rate of nickel was about 62.4%, and an iron concentration was 0.009 g/L.

A pressurized leaching solution 15 m³ contained 31.46 g/L nickel, and a pressurized leaching rate of nickel was 35.1%. An overall normal-pressure and pressurized leaching rate of nickel was 97.5%.

A copper concentration in the impurity-removed leaching solution was detected to be 0.01 g/L.

### Comparative Example 21

Sulfide mineral: high nickel matte containing 71% of nickel, 1% of iron, and 20% of sulfur.

Extraction equipment: the same as that in Example 27.

Extraction steps: in the second-stage grinding, the concentrated sulfuric acid was not added for preactivation, and other steps were the same as those in Example 27.

Design parameters: the concentration of the sulfuric acid solution in the normal-pressure leaching was adjusted to be 204 g/L, so that the total concentration of sulfuric acid added was consistent, and other parameters were the same as those in Example 27.

Detection results: a normal-pressure leaching solution 20 m³ contained 73.48 g/L nickel, and a normal-pressure leaching rate of nickel was 51.1%, reduced by 12.9% compared with Example 27.

### Comparative Example 22

Sulfide mineral: high nickel matte containing 71% of nickel, 1% of iron, and 20% of sulfur.

Extraction equipment: the same as that in Example 27.

Extraction steps: the same as those in Example 27.

Design parameters: a particle size of the high nickel matte after second grinding satisfied that the particle size D90 was 80 µm, and other design parameters are the same as those in example 27.

Detection results: a normal-pressure leaching solution 20 m³ contained 69.01 g/L nickel, and a normal-pressure leaching rate of nickel was 48.0%, reduced by 16.0% compared with Example 27.

### Comparative Example 23

Sulfide mineral: high nickel matte containing 71% of nickel, 1% of iron, and 20% of sulfur.

Extraction device: the normal-pressure leaching device was not provided with the ultrasonic super-energy oxidizer, but was a conventional mechanical stirring leaching device.

Extraction steps: the same as those in Example 27.

Design parameters: the same as those in Example 27.

Detection results: a normal-pressure leaching solution 20 m³ contained 62.24 g/L nickel, and a normal-pressure leaching rate of nickel was 43.3%, reduced by 20.7% compared with Example 27.

**Table 8 Leaching Rates of Target Metals in Various Examples and Comparative Examples**

| | Sulfide Mineral Raw Material | Leached Metal | Normal-pressure Leaching Rate | Pressurized Leaching Rate | Total Leaching Rate |
|---|---|---|---|---|---|
| Example 26 | Copper-cobalt sulfide mineral | Copper | 62.3% | 36.9% | 99.2% |
| | | Cobalt | 64.2% | 34.1% | 98.3% |
| Example 27 | High nickel matte | Nickel | 64.0% | 35.4% | 99.4% |
| Example 28 | Copper-cobalt alloy | Copper | 90.1% | 9.3% | 99.4% |
| | | Cobalt | 89.8% | 9.3% | 99.1% |
| Example 29 | Nickel sulfide mineral | Nickel | 61.2% | 37.0% | 98.2% |
| Example 30 | Low nickel matte | Nickel | 62.4% | 35.1% | 97.5% |
| Comparative Example 21 | High nickel matte | Nickel | 51.1% | | |
| Comparative Example 22 | High nickel matte | Nickel | 48.0% | | |
| Comparative Example 23 | High nickel matte | Nickel | 43.3% | | |

As illustrated in conjunction with Table 8, it can be seen from Example 27 and Comparative Examples 21-23 that in the method of the present invention, by carrying out the preactivation using the concentrated sulfuric acid solution in the grinding stages, grinding the particle size D90 of the sulfide mineral to be smaller than 40 µm and fully dispersing oxygen using the ultrasonic super-energy oxidizer in the normal-pressure leaching stage, the leaching rate of target leaching in the normal-pressure leaching stage can be effectively improved, and in a case where pressurized leaching equipment is simplified, the overall leaching rate of a target metal in the sulfide mineral still can be ensured. Thus, the energy consumption and costs in the extraction process and the potential safety hazards in the production process are reduced. Optionally, it can be seen from Examples 26-30 that the method of the present invention is suitable for extracting a target metal from a variety of sulfide minerals, the leaching rate in the normal-pressure leaching stage can reach 62% or above, and the total leaching rate can reach 97.8% or above.

Finally, it should be indicated that various examples above are merely used for illustrating the technical solutions of the present invention, rather than limiting the present invention. While the detailed description is made to the present invention with reference to various preceding examples, those ordinarily skilled in the art should understand that they still could modify the technical solutions recited in various preceding examples, or make equivalent substitutions to some or all of the technical features therein; and these modifications or substitutions do not make the essence of corresponding technical solutions depart from the scope of the technical solutions of various examples of the present invention.

## Claims

1. A method of leaching sulfide mineral, **characterized by** comprising:
grinding the sulfide mineral into a powder, wherein a particle size D90 of the powder is smaller than or equal to 40 µm, wherein
the sulfide mineral is at least one of nickel sulfide mineral, copper-cobalt sulfide mineral, cobalt-copper alloy, high nickel matte, and low nickel matte.

2. The method of leaching sulfide mineral according to claim 1, comprising: first preparing the sulfur mineral into a slurried solution, performing an oxidizing roasting treatment on the slurried solution, and then carrying out an oxidizing leaching reaction and impurity removal to render a sulfate solution, wherein during the oxidizing roasting treatment on the slurried solution, oxygen with purity greater than 90% is continuously introduced into the slurried solution, and a temperature of the slurried solution is maintained at 400-800 °C.

3. The method of leaching sulfide mineral according to claim 2, comprising:
step a of slurrying reaction: grinding the sulfide mineral, and then mixing a ground sulfide mineral with a liquid to prepare a slurried solution, wherein a solid content of the slurried solution is greater than 50%;
step b of oxidizing roasting treatment: adding the slurried solution into an oxidizing roasting device, to carry out the oxidizing roasting treatment to render a roasted material, wherein the oxygen with purity greater than 90% is continuously introduced into the slurried solution, and the temperature of the slurried solution is maintained at 400-800 °C;
step c of oxidizing leaching reaction: transferring the roasted material into an oxidizing leaching reaction device, introducing oxygen into the oxidizing leaching reaction device to carry out an oxidizing leaching reaction, and performing a solid-liquid separation treatment on a slurry produced after the oxidizing leaching reaction, to render a leaching residue and a leaching solution; and
step d of impurity removal: performing impurity removal on the leaching solution produced in the step c, to render a sulfate solution,
wherein the liquid in the step a is at least one of water, the leaching solution obtained from the step c of oxidizing leaching reaction or the sulfate solution obtained after the step d of impurity removal.

4. The method of leaching sulfide mineral according to claim 3, wherein in the step c, the oxidizing leaching reaction device is a stirring reactor equipped with a resonant oxygen injector; and
the step c comprises, after adding the roasted material into a sulfuric acid reaction solution, injecting oxygen, dispersed by the resonant oxygen injector, into the stirring reactor from a predetermined position below a liquid level of the stirring reactor, to carry out the oxidizing leaching reaction.

5. The method of leaching sulfide mineral according to claim 1, wherein the sulfide mineral is ground for two times, and the ground sulfide mineral is mixed with water to prepare a slurried solution with a solid content greater than or equal to 70%, a roasted material obtained after roasting the slurried solution is mixed with hydrochloric acid and oxygen, to carry out a leaching reaction under a normal-pressure condition, and after the reaction is completed, a chloride solution containing a target non-ferrous metal is obtained;
preferably, the leaching reaction comprises: adding the roasted material into hydrochloric acid while stirring, introducing oxygen to carry out the oxidizing leaching reaction, and performing solid-liquid separation after completing the reaction to render a leaching solution and a filter residue; and
preferably, the oxygen is introduced in such a way that a mixture of the roasted material and hydrochloric acid is cyclically conveyed into a reactor and stirred, and meanwhile the oxygen is introduced into the reactor by an ultrasonic super-energy oxidizer to be mixed with the roasted material and hydrochloric acid, wherein purity of the oxygen is greater than 90%, and an introduction rate of the oxygen is (10-60) Nm³/h.

6. The method of leaching sulfide mineral according to claim 1, comprising:
S1, mixing a ground powder obtained by grinding the sulfide mineral with a sulfuric acid solution, to prepare a slurried solution with a solid content greater than 30%;
S2, under a normal-pressure condition, introducing oxygen from a bottom of the slurried solution, so that the oxygen enters the slurried solution from the bottom of the slurried solution and reacts with the slurried solution, and after completing the reaction, performing filtration to render a filter residue and a filtrate; and
S3, under a condition that a gas pressure is greater than 1.2 Mpa, slurrying the filter residue, then making a slurried filter residue mixed and react with oxygen, after completing the reaction, performing filtration to render a leaching solution, and removing impurities from the leaching solution, to render a sulfate solution containing a target non-ferrous metal.

7. The method of leaching sulfide mineral according to claim 6, wherein
the step S2 comprises: adding the slurried solution from a top of a reaction kettle into the reaction kettle at a predetermined feeding rate in a predetermined feeding amount, and introducing a predetermined amount of oxygen from a bottom of the reaction kettle by a resonant oxygen injector, such that the oxygen enters the slurried solution from bottom of the slurried solution and contacts and reacts with the slurried solution, wherein a normal-pressure condition is maintained in the reaction kettle during the reaction; and a reaction temperature of the slurried solution and the oxygen is 60-90 °C, and reaction time is 2-13 h; and
the reaction kettle is a Pachuca tank with pneumatic stirring, and a bottom of the Pachuca tank is connected to the resonant oxygen injector.

8. The method of leaching sulfide mineral according to claim 2, wherein
the step S2 comprises: adding the slurried solution from a top of a Pachuca tank, and introducing the oxygen by a resonant oxygen injector from a bottom of the Pachuca tank, wherein a feeding rate of the slurried solution is (0.5-10) t/h; and
preferably, in the step S2, an interval between a liquid level of the slurried solution in the Pachuca tank and an inlet of the oxygen is at least 5 meters; the purity of the oxygen is greater than 90%, and an introduction rate of the oxygen is (10-60) Nm³/h.

9. The method of leaching sulfide mineral according to claim 1, wherein firstly the sulfide mineral is ground into a powder, and prepared into a slurried solution, then the slurried solution is added to a pre-formulated sulfuric acid reaction solution to perform a preimpregnation reaction, and then an oxidizing leaching reaction is carried out to render a sulfate solution, wherein a concentration of sulfuric acid in the sulfuric acid reaction solution is 30-300 g/L.

10. The method of leaching sulfide mineral according to claim 9, comprising
step a of slurrying reaction: grinding the sulfide mineral into a powder, and mixing the powder with a liquid to prepare the slurried solution;
step b of preimpregnation reaction: adding the slurried solution into the pre-formulated sulfuric acid reaction solution, introducing oxygen, and performing a preimpregnation reaction to render a reaction solution; and
step c of oxidizing leaching reaction: introducing oxygen into the reaction solution to perform an oxidizing leaching treatment, to render a leaching solution and a leaching residue, wherein
preferably, when the sulfide mineral is at least one of nickel sulfide mineral, high nickel matte, and low nickel matte, after the step c of oxidizing leaching reaction is completed, the method comprises a step d of impurity removal: performing impurity removal on the leaching solution to render a sulfate solution.

11. The method of leaching sulfide mineral according to claim 9, wherein
the step a is: adding a solution into a slurrying device equipped with a stirring device, grinding the sulfide mineral into the powder, and then pouring the powder into the slurrying device by pneumatic conveying at a positive pressure of 0.4-0.8 Mpa, to prepare the slurried solution;
a device for grinding the sulfide mineral into the powder is a vertical roller mill;
a mass ratio of liquid to solid in the slurried solution is 1.5-2:1; and
the liquid in the step a is at least one of water, the leaching solution obtained from the step c of oxidizing leaching reaction, and the sulfate solution obtained after the step d of impurity removal.

12. The method of leaching sulfide mineral according to any one of claims 9-11, wherein in the step b, a concentration of sulfuric acid in the sulfuric acid reaction solution is 150-300 g/L;
a temperature of the preimpregnation reaction is 65-80 °C;
purity of the oxygen is greater than 90%, and an introduction rate of the oxygen is 10-60 Nm³/h; and
a ratio of a flow rate of the oxygen to a flow rate of the slurried solution is oxygen flow rate : slurried solution flow rate = (7-10 Nm³/h) : (8-10 m³/h).

13. The method of leaching sulfide mineral according to any one of claims 9-12, wherein the step c comprises a normal-pressure leaching process and a pressurized leaching process; and
the leaching solution is divided into a first leaching solution and a second leaching solution; and the leaching residue is divided into a first leaching residue and a second leaching residue.

14. The method of leaching sulfide mineral according to claim 13, wherein a normal-pressure leaching reaction device is a stirring reactor equipped with a super-energy oxidizer, and
wherein in the normal-pressure leaching process, a stirring rate of the stirring reactor is 50-120 r/min, the slurried solution flows out from an upper part of the stirring reactor and then flows into the super-energy oxidizer, the slurried solution and oxygen are mixed in the super-energy oxidizer, and then poured into the stirring reactor from a bottom of the stirring reactor.

15. The method of leaching sulfide mineral according to claim 1, comprising S1, grinding the sulfide mineral into a powder, to prepare a slurried solution;
S2, mixing the slurried solution with a sulfuric acid solution, and performing at least one operation of stirring, introducing oxygen and maintaining a reaction temperature during mixing, so as to perform preactivation to render a preactivated slurried solution;
S3, performing normal-pressure leaching on the preactivated slurried solution, performing at least one operation of stirring and maintaining a normal-pressure leaching temperature in the normal-pressure leaching process, and meanwhile introducing oxygen, to render a normal-pressure leaching slurried solution after finishing the reaction;
S4, filtering the normal-pressure leaching slurried solution to render a normal-pressure leaching residue and a normal-pressure leaching solution; and
S5, slurrying the normal-pressure leaching residue with addition of water, then adding a slurried normal-pressure leaching residue into a sulfuric acid solution for pressurized leaching, performing at least one operation of introducing oxygen, adjusting a gas pressure and adjusting an initial temperature of the pressurized leaching in the pressurized leaching process, and after full reaction, performing solid-liquid separation to render a pressurized leaching solution and a pressurized leaching residue, wherein
preferably, in S2, a concentration of sulfuric acid in the sulfuric acid solution is 150 g/L-500 g/L; and in S5, a concentration of sulfuric acid in the sulfuric acid solution is 20 g/L-160 g/L.

16. The method of leaching sulfide mineral according to claim 15, wherein in S2, a method of mixing the slurried solution with the sulfuric acid solution is adding the slurried solution into the sulfuric acid solution, wherein a rate of adding the slurried solution is 0.5-10 t/h; a stirring linear rate is 5-6 m/s; and a reaction temperature is maintained at 60-90 °C; a method of introducing oxygen is: dispersing oxygen into microbubbles by a microbubble reactor, and then injecting and introducing the microbubbles from below a liquid level of a preactivation reaction device, wherein a rate of introducing the oxygen is 1-10 Nm³/h, and purity of the oxygen is greater than 90%; reaction time of preactivation is the time after adding the slurried solution, and preactivation time is 0.8-1.5 h.

17. The method of leaching sulfide mineral according to claim 15, wherein S3 is:
performing a normal-pressure leaching reaction in a normal-pressure leaching device; making a gas-liquid mixing pump connected to an oxygen source and communicate with a bottom of the normal-pressure leaching device; performing the normal-pressure leaching on the preactivated slurried solution, and performing at least one operation of stirring and maintaining a normal-pressure leaching temperature in the normal-pressure leaching process; meanwhile mixing the slurried solution flowing out from an upper part of the normal-pressure leaching device with the oxygen pumped by the gas-liquid mixing pump; and then pumping a mixture back into the kettle from a lower part of the normal-pressure leaching device, to render the normal-pressure leaching slurried solution after the reaction ending.

18. The method of leaching sulfide mineral according to claim 1, comprising:
S1, grinding the sulfide mineral twice, and adding a concentrated sulfuric acid in twice grinding to perform preactivation, to render a material after the twice grinding;
S2, performing normal-pressure leaching on the material having been ground twice in a sulfuric acid solution, to render a normal-pressure leaching slurry, wherein at least one operation of stirring, introducing oxygen and maintaining a normal-pressure leaching temperature is performed in the normal-pressure leaching process;
S3, filtering the normal-pressure leaching slurry to render a normal-pressure leaching residue and a normal-pressure leaching solution; and
S4, slurrying the normal-pressure leaching residue in a sulfuric acid solution, and then performing pressurized leaching, wherein at least one operation of introducing oxygen, adjusting a gas pressure and adjusting an initial temperature of pressurized leaching is performed in the pressurized leaching process, and after full reaction, performing filtration to render a pressurized leaching residue and a pressurized leaching solution.

19. The method of leaching sulfide mineral according to claim 18, wherein in S1, the twice grinding comprises first-stage grinding and second-stage grinding; in the second-stage grinding, the concentrated sulfuric acid is added to perform preactivation; a particle size of the material after the twice grinding needs to satisfy that a particle size D90 of the material after the first-stage grinding is smaller than 80 µm, and the particle size D90 of the material after the twice grinding is smaller than 40 µm; a concentration of sulfuric acid in the concentrated sulfuric acid in S1 is 1400-1800 g/L, and an amount of the concentrated sulfuric acid added is 1.0-5.5% of a weight of the sulfide mineral; a rate of adding the concentrated sulfuric acid is 0.1-0.5 t/h; and the concentrated sulfuric acid is added by pipeline conveying and injecting; preferably, a ball mill or a Raymond mill is used in the first-stage grinding for coarse grinding, and a tube mill, a vibration mill or a mechanical stirring mill is used in the second-stage grinding for fine grinding.

20. The method of leaching sulfide mineral according to claim 18, wherein a device for introducing the oxygen is an ultrasonic super-energy oxidizer, and the ultrasonic super-energy oxidizer is connected to an oxygen source and communicates with a bottom of a normal-pressure leaching device; and
the oxygen is introduced in such a way that the ultrasonic super-energy oxidizer mixes the introduced oxygen and a slurry, which is obtained by mixing the material having been ground twice and flowing out from an upper part of the normal-pressure leaching device and the sulfuric acid solution, and pumps a mixture into the normal-pressure leaching device from the bottom of the normal-pressure leaching device.
